# EUROPÄISCHE PATENTSCHRIFT

(11) **EP 2 848 310 B1**
(45) Veröffentlichungstag und Bekanntmachung des Hinweises auf die Patenterteilung: **15.01.2020**
(21) Anmeldenummer: 14184674.1
(22) Anmeldetag: 12.09.2014
(51) Int. Cl.: B01L 9/06, B01L 7/00, G01N 21/03, G01N 21/11, G01N 21/13, G01N 21/71

(54) **Träger für Kapillaren**
Holder for capillaries
Support pour capillaires

(30) Priorität: 13.09.2013 EP 13184379
(43) Veröffentlichungstag der Anmeldung: 18.03.2015
(73) Patentinhaber: NanoTemper Technologies GmbH, 81369 München (DE); Hirschmann Laborgeräte GmbH & Co. KG, 74246 Eberstadt (DE)
(72) Erfinder: Baaske, Philipp, Dr., 80689 München (DE); Duhr, Stefan, Dr., 81369 München (DE); Reichl, Stefan, 81245 München (DE); Bigus, Hans-Jürgen, Dr., 72124 Pliezhausen (DE)
(74) Vertreter: Vossius & Partner Patentanwälte Rechtsanwälte mbB

(56) Entgegenhaltungen:
- EP-A2- 1 695 762
- WO-A2-01/21310
- WO-A2-03/066667
- DE-A1-102011 054 998
- US-A1- 2003 165 409
- US-A1- 2010 136 632

## Beschreibung

Die Erfindung betrifft generell einen Träger für Kapillaren. Insbesondere betrifft die Erfindung einen Träger für mehrere Kapillaren mit der eine gleichzeitige Befüllung mehrerer Kapillaren aus einer Mikrotiterplatte ermöglicht wird. Zudem betrifft die vorliegende Erfindung auch eine Vorrichtungen und ein Verfahren für Befüllung, Transport und Messung von Flüssigkeiten mit Volumina im Mikroliterbereich.

### HINTERGRUND DER ERFINDUNG

Die Firma NanoTemper Technologies GmbH entwickelt und vertreibt Messgeräte, bei denen Flüssigkeiten innerhalb einer Kapillare optisch untersucht werden. Es ist zudem bekannt, dass man eine einzelne Kapillare mit der Hand nimmt, in eine Flüssigkeit eintaucht und dann einzeln auf einen Träger ablegt und dann ins Messgerät schiebt. Dieses Verfahren zum Befüllen einzelner Kapillaren wird beispielsweise in einem Video von NanoTemper Technologies GmbH, das unter http://www.youtube.com/watch?v=rCot5Nfi_Og veröffentlicht ist, gezeigt. Das individuelle Befüllen ist für bestimmte Einzelproben vorteilhaft, jedoch benötigt dieses Verfahren für größere Mengen von Proben viele Handlungsschritte die nicht ohne weiteres automatisierbar sind.

In der Anmeldung EP 2 572 787, die von der gleichen Anmelderin wie die vorliegende Erfindung eingereicht wurde, werden Kapillaren beschrieben, die mit Hilfe von magnetischen Kräften an einem Träger gehalten werden. Dies ermöglicht unter anderem eine einfachere und/oder genauere Positionierung der einzelnen Kapillare auf dem Träger. Mit anderen Worten, das individuelle Befüllen der Einzelkapillaren ist weiter bevorzugt, jedoch wird der darauf folgende Handlungsschritt durch die magn. Kräfte unterstützt. EP 1695762 A2, WO 03/066667, US 2003/0165409, sowie WO 01/21310 offenbaren verschiedene Kapillarträger, DE 10 2011 054998 offenbart hingegen einen Aufbewahrungsbehälter für einzelne Kapillaren.

In manchen biochemischen/biologischen/diagnostischen/medizinischen Anwendungen wird jedoch mit magnetischen Beads in den Flüssigkeiten gearbeitet. Diese Stoffe bzw. "magnetischen Beads" können mit den magnetischen Kapillaren nicht verwendet werden da sie dort von den Magnetfeldern, z.B. durch die Magnetfelder, die die magnetischen Kapillaren halten, bzw. durch das magnetische Material auf der Kapillare selbst, negativ beeinflusst werden.

Auch in Anwendungsbereichen wie NMR (Kernspinresonanz von engl.: nuclear magnetic resonance), in denen ebenfalls mit Magnetfeldern gearbeitet wird, können magnetische Kapillaren nicht eingesetzt werden.

Es ist ein Micro-Cuvette Array, Optim 1000, der Fa. ForteBio bekannt, bei dem 16 Mikroküvetten in Aussparungen eines Trägers angeordnet und manuell einzeln oder mittels einer Multikanalpipette befüllt werden. Das Array muss nach dem Befüllen der Mikroküvetten dicht verschlossen werden und wird dann einem Analysegerät zugeführt. Das Array wird unter http://www.youtube.com/watch?v=DmIdWZcMO-M vorgestellt. Das Befüllen dieser Mikroküvetten kann jedoch nur umständlich händisch vorgenommen werden. Zudem ist die Befüllung der Mikroküvetten schlecht nachzuvollziehen bzw. schlecht zu überprüfen und die Mikroküvetten sind so kurz, dass die Verdampfung der Flüssigkeit ein sehr großen Problem darstellt wodurch eine aufwändige Abdichtung notwendig ist.

Für labortechnische Analysten werden häufig Mikrotiterplatten verwendet. Es ist jedoch nicht möglich, diese Mikrotiterplatten für alle labortechnischen Analysen zu verwenden. Beispielsweise ist es bisher nicht möglich, Thermophoresemessungen innerhalb der Kavitäten solcher Mikrotiterplatten direkt durchzuführen.

Es besteht daher der Bedarf an einer verbesserten Vorrichtung bzw. einem verbesserten Verfahren. Vorzugsweise soll erlaubt werden, dass mehrere Kapillaren gleichzeitig gefüllt werden können und zwar bevorzugt in sicherer, effizienter sowie einfach und vorteilhaft handelbarer Weise.

### ZUSAMMENFASSUNG DER ERFINDUNG

Die erfindungsgemäße Vorrichtung sowie das erfindungsgemäße Verfahren wird durch die Merkmale der unabhängigen Ansprüche definiert. Vorteilhafte Ausgestaltungen ergeben sich aus den Unteransprüchen.

Die erfindungsgemäße Vorrichtung, im Folgenden auch als Träger, Halterung, Chip oder Array bezeichnet, soll vorzugsweise mehrere Kapillaren festhalten, die beispielsweise für optische Thermophoresemessungen bzw. Microscale Thermophoresis Messungen verwendet werden, vorzugsweise in Geräten der Firma NanoTemper Technologies GmbH. Die mehreren Kapillaren sind vorzugsweise in einer Ebene angeordnet und mechanisch am Träger befestigt, wobei der Abstand benachbarter Kapillaren vorzugsweise 2,25mm oder ein ganzzahliges Vielfaches davon beträgt. Zumindest ein erstes freies Ende einer jeden Kapillare steht über den Träger derart über, dass diese freien Enden der Kapillaren gleichzeitig in Kavitäten einer Mikrotiterplatte eingeführt werden können.

Im Folgenden soll die Ebene des Trägers in der die Kapillaren angeordnet sind als x-y Ebene bezeichnet werden. Senkrecht zu dieser Ebene erstreckt sich die Höhe bzw. Dicke des Trägers (z-Richtung). Oben und unten des Trägers beziehen sich auf die z-Richtung. Zudem soll das freie Ende der Kapillaren "vorne" vom Träger definieren und das gegenüberliegende Ende der Kapillaren "hinten" des Trägers darstellen. Schließlich soll die senkrechte Richtung zur Verbindunglinie vorne-hinten innerhalb der Ebene als Längsrichtung bezeichnet werden.

Zudem sollte der Träger, auf dem die Kapillaren befestigt sind, nicht vollständig Licht undurchlässig sein, da dann eine optische Messung senkrecht zur Längsachse der Kapillare erschwert werden könnte. Der Träger sollte entlang der Längsachse einer jeden Kapillare einen Licht durchlässigen Bereich aufweisen, im Folgenden auch als Messbereich bzw. Messfenster oder Messaussparung bezeichnet. Alternativ kann der Träger im Messbereich einen reflektiven und/oder absorbierenden Bereich bzw. ein reflektierendes und/oder absorbierendes Material aufweisen, vorzugsweise hat dieser Bereich bzw. dieses Material eine geringe Autofluoreszenz, vorzugsweise keine Autofluoreszenz.

Beispielsweise sind 24 Kapillaren auf einem erfindungsgemäßen Träger mechanisch befestigt. Gemäß einer bevorzugten Ausführungsform haben die Kapillaren einen Mitte-zu-Mitte Abstand von 4,5mm. Dieser Abstand entspricht dem Raster der Kavitäten in dem Industriestandard für 384er Mikrotiterplatten (Multiwellplatte engl. *multi well plate;* 24 x 16 Kavitäten in 4,5 mm Mitte-zu-Mitte Abstand). Da eine erfindungsgemäße Thermophoresemessung innerhalb der Kavitäten der Mikrotiterplatten bekanntermaßen nicht möglich ist, sollten die einzelnen Proben von den Kavitäten in Kapillare transferiert werden. Ein erfindungsgemäßer Träger mit 24 Kapillaren (auch als 24er Kapillar-Array oder 24er Kapillar-Chip bezeichnet) entspricht somit einer "Reihe" (Nummerierung 1 bis 24, "Landscape"-Orientierung) dieser 384er Mikrotiterplatte (siehe beispielsweise http://de.wikipedia.org/wiki/Mikrotiterplatte).

Die meist rechteckigen Mikrotiterplatten bestehen meist aus Kunststoff (in der Regel Polystyrole, manchmal auch Polyvinylchlorid), für sehr spezielle Anwendungen auch aus Glas. Sie enthalten viele voneinander isolierte Näpfchen (Kavitäten, engl. wells) in Reihen und Spalten. Die genauen Abmessungen (Länge×Breite×Höhe) betragen gemäß ANSI-Standard auf Empfehlung der Society for Biomolecular Screening (SBS) 127,76 mm×85,48 mmx 14,35 mm.

Es gibt eine Vielzahl an Formaten, alle auf der gleichen Grundfläche und mit zum Teil variabler Höhe: 6 Näpfchen (2x3), Füllvolumen zwischen 2-5 ml; 12 Näpfchen (3x4), Füllvolumen zwischen 2-4 ml; 24 Näpfchen (4x6), Füllvolumen zwischen 0,5-3 ml; 48 Näpfchen (6x8), Füllvolumen zwischen 0,5-1,5 ml; 96 Näpfchen (8×12), Füllvolumen zwischen 0,1-0,3 ml; 384 Näpfchen (16×24), Füllvolumen zwischen 0,03-0,1 ml; und 1536 Näpfchen (32x48), Füllvolumen 0,01 ml. Letztere werden im UHTS (Ultra HTS) verwendet.

Die Näpfchen sind in verschiedenen Formen verfügbar: F-Boden (Flachboden), C-Boden (Flachboden mit minimal abgerundeten Ecken), V-Boden (konisch zulaufender Boden) und U-Boden (U-förmige Vertiefung).

Die Normung erfolgt bisher beispielsweise durch die Society for Biomolecular Sciences als ANSI Standards (ANSI/SBS 1-2004, ANSI/SBS 2-2004, ANSI/SBS 3-2004, ANSI/SBS 4-2004). Die Abstände von Mikrotiterplatten sind ebenfalls in diesen Normen definiert. Insbesondere ist in diesem Standard der Abstand von nebeneinanderliegenden Spalten und Reihen für 96, 384, und 1536 Mikrotiterplatten festgelegt. Bei 96er Mikrotiterplatten beträgt der Abstand zwischen zwei Reihen bzw. zwei Spalten 9mm; bei 384er Mikrotiterplatten beträgt der Abstand zwischen zwei Reihen bzw. zwei Spalten 4,5mm; und bei 1536er Mikrotiterplatten beträgt der Abstand zwischen zwei Reihen bzw. zwei Spalten 2,25mm.

Erfindungsgemäß taucht man den Träger mit den 24 Kapillaren in die 384er Platte ein, wobei sich die 24 Kapillaren aufgrund der Kapillarkräfte innerhalb weniger Sekunden von alleine vollsaugen können. Der Träger mit den gefüllten Kapillaren kann anschließend in/auf eine Halterung (im Folgenden auch als Tray bezeichnet), die mehrere Träger aufnehmen kann, gelegt werden. Vorzugsweise kann ein Tray vorzugsweise bis zu vier der erfindungsgemäßen Träger aufnehmen. Den Tray schiebt man dann in ein entsprechendes Messgerät, bspw. der Fa. NanoTemper®.

Die Verwendung des erfindungsgemäßen Trägers zusammen mit dem erfindungsgemäßen Tray erlaubt es, dass man beispielsweise 4x24=96 Kapillaren/Proben sehr einfach und schnell messen kann, d.h. es werden deutlich weniger Handlungsabläufe im Vergleich zum bekannten Verfahren mit Einzel-Kapillaren benötigt. Beispielsweise bräuchte man bei der Befüllung und Ablage von 96 einzelnen Kapillaren aus einer Multiwellplatte (1x Befüllen + 1x Ablegen=2 Handlungsabläufe) 2 x 96= 192 einzelne Handlungsabläufe. Bei Einsatz von 4 Trägern, bestückt mit je 24 Kapillaren (4x24 = 96), sind für Befüllung und Ablage lediglich 2x4 = 8 Handlungsabläufe erforderlich; der Aufwand gegenüber 96 Einzelkapillaren reduziert sich also auf 8/192*100%=4%, eine Verbesserung um den Faktor 25. Der Träger ist besser zu handhaben als einzelne Kapillaren, schützt die Kapillaren vor mechanischen Beschädigungen und Verschmutzungen, beispielsweise Fingerabdrücke die beispielsweise durch ihre Autofluoreszenz die optischen Messungen stören können, was die Prozesssicherheit deutlich erhöht.. Der Träger verhindert die Verwechslung und/oder Vertauschung einzelner Kapillaren und ermöglicht durch eine vorzugsweise eindeutige Kennzeichnung eine vorzugsweise eindeutige Nachverfolgung/Dokumentation/Zuordnung von zu untersuchenden Proben zu Kapillaren und Träger, was für diagnostische Anwendungen und analytische Anwendungen wie beispielsweise Wirkstoffforschung oder Wirkstoffformulierung vorteilshaft ist.

Die vorliegende Erfindung betrifft alternativ oder zusätzlich auch den Tray, der als Ablage bzw. Ablagekasten zur Aufnahme von mindestens einem, vorzugsweise zwei, drei, vier oder noch mehr erfindungsgemäßen Trägern dient. Der erfindungsgemäße Träger und das erfindungsgemäße Tray führen somit zu einer massiven Reduktion der Handlungsabläufe.

Der beispielhaft beschriebene Träger mit 24 Kapillaren ist vorzugsweise nicht nur für 384er Mikrotiterplatten verwendbar sein, sondern beispielsweise auch für 96er Mikrotiterplatten (9mm Raster) kompatibel; in diesem Fall treffen z.B. 2 Kapillaren (gemeinsam) eine Kavität der Mikrotiterplatte. Der erfindungsgemäße Träger ist vorzugsweise nicht nur manuell von einer Person zum (Be)Füllen und/oder Messen verwendbar, sondern vorzugsweise auch automatisch, z.B. durch Pipettier-Roboter, handhabbar.

Der erfindungsgemäße Träger wird vorzugsweise eindeutig gekennzeichnet, um beispielsweise Messdaten eindeutig Proben zuzuordnen. Beispielsweise kann eine Kennzeichnung mittels DataMatrix Code, RFiD, o.ä. mit einer "unique ID" erfolgen, wodurch eine Nachvollziehbarkeit der Messungen, beispielsweise für Qualitätskontrolle und/oder Diagnostik-Anwendungen ermöglicht wird.

Die vorliegende Erfindung betrifft auch eine Befüllstation. Mit dieser können die Kapillaren eines erfindungsgemäßen Trägers vorzugsweise einfach und sicher befüllt werden. Da nicht alle Benutzer/Anwender mit Mikrotiterplatten arbeiten, ist vorzugsweise auch eine alternative bzw. zusätzliche Befüllung der Kapillaren möglich. Beispielsweise können die Kapillaren mittels Einzelkanal- und/oder Mehrkanal-Pipette, vorzugsweise manuell, befüllt werden. Die manuelle Befüllung erfolgt dabei vorzugsweise von oben. Es können für kleinere Versuchsreihen oder Vorversuche auch Teilbereiche des Trägers befüllt werden, d.h., es werden nicht alle Kapillare des Trägers befüllt.

Im Folgenden werden weitere oder alternative vorteilhafte Merkmale der vorliegenden Erfindung beispielhaft diskutiert.

Die Kapillaren befüllen sich vorzugsweise von alleine, d.h. allein durch Kapillarkräfte wenn die Kapillaren in eine Flüssigkeit eingetaucht werden. Vorzugsweise werden keine Pumpen oder andere aktive Elemente zum Befüllen der Kapillaren benötigt. Dies schließt jedoch nicht aus, dass zusätzliche Geräte bzw. Elemente zum Befüllen der Kapillaren alternativ oder zusätzlich verwendet werden können. Beispielsweise können die Kapillaren des erfindungsgemäßen Trägers auch mittels Pipette befüllt werden (siehe beispielsweise obige Diskussion in Bezug auf die Befüllstation).

Für die Befüllung mittels Kapillarkräften ist es bevorzugt, dass die Kapillaren vorzugsweise mindestens eines der nachfolgenden Kriterien erfüllen. Die Kapillaren sollten einen kleinen Innendurchmesser (ID) aufweisen. Insbesondere hängen die Kapillarkräfte vom Innenradius/Durchmesser der Kapillare ab. Zudem hängt die Steighöhe der Flüssigkeit innerhalb der Kapillaren auch noch von der Oberflächenspannung und der Dichte der Flüssigkeit ab. Erfindungsgemäß können für verschieden dichte Flüssigkeiten verschiedene Innenradien/Innendurchmesser bevorzugt sein. Meist wird es sich bei der Flüssigkeit um eine wässrige Lösung handeln. Bevorzugte Innendurchmesser liegen beispielsweise im Bereich von 0,01mm bis 1,0mm, weiter bevorzugt im Bereich von 0,1mm bis 0,5mm.

Ist die Kapillarlängsachse parallel zur Gravitation ausgerichtet und wird die Kapillare von unten befüllt, so müssen die Kapillarkräfte die Flüssigkeitssäule gegen die Gravitation einziehen. Ist z.B. eine Detergenz oder ein anderer Stoff in der Lösung/Flüssigkeit, der die Kapillarkräfte/Oberflächenkräfte reduziert, so können die Kapillarkräfte bei einer Orientierung der Kapillarlängsachse parallel zur Gravitation zu schwach sein. Für die Prozesssicherheit kann es daher vorteilhaft sein, die Kapillaren von oben zu befüllen, so dass die Gravitation in Richtung der Kapillarkräfte wirkt und diese so sogar noch unterstützt. Es kann auch vorteilshaft sein den Effekt der "schiefen Ebene" auszunützen. Beispielsweise kann die Kapillarlängsachse relativ zur Gravitation um einen bestimmten Winkel, vorzugsweise um 45°, 60° und/oder 90° verkippt bzw. schräg gestellt werden (siehe beispielsweise Diskussion in Bezug auf die Befüllstation). Vorzugsweise werden sowohl die Kapillaren als auch die Mikrotiterplatte verkippt, so dass die Kapillarachsen vorzugsweise immer noch senkrecht zu der Ebene des Plattenbodens der Mikrotiterplatte ausgerichtet sind. Wenn nur die Kapillaren verkippt werden, kann es passieren, dass bei großen Verkippungswinkeln die Kapillaren schräg in die Kavitäten der Mikrotiterplatte stehen, wodurch die Gefahr entsteht, dass die Kapillaren abrechen weil sie gegen die Wände der Kavitäten in der Mikrotiterplatte stoßen.

Die Mikrotiterplatten, in deren Kavitäten die Kapillaren eingetaucht werden, werden dabei vorzugsweise auch entsprechend gegen die Horizontale verkippt..

Aufgrund der begrenzten Kapillarkräfte kann nur eine bestimmte "Flüssigkeitssäule" gegen die Gravitation gehoben bzw. gehalten werden. Für eine optische Messung innerhalb einer Kapillare, beispielsweise eine Thermophorese-Messung, sollte jedoch vorzugsweise sichergestellt sein, dass das Messfenster/der Messbereich der Kapillare - d.h. der Bereich der Kapillare in dem die optischen Messung durchgeführt wird - mit der zu messenden Flüssigkeit gefüllt ist. Dies wird erfindungsgemäß beispielsweise dadurch erreicht, dass der Messbereich nahe an dem freien Kapillarende liegt, d.h. in der Nähe des zu befüllenden Kapillarendes liegt. Zudem liegt das Messfenster des Trägers vorzugsweise derart zum Messbereich der Kapillare, dass eine optische Messung, vorzugsweise senkrecht zur Ebene in der die Kapillaren angeordnet sind, durchführbar ist. Vorteilshaft ist auch, insbesondere im Hinblick der Prozesssicherheit bei einer Automatisierung, wenn die Kapillare genauso lang ist, dass sie beispielsweise bei einer Schrägstellung um 90° gegen die Gravitation (= horizontale Ausrichtung) immer vollständig gefüllt wird. Insbesondere sind die erfindungsgemäßen Kapillaren während einer Messung vorzugsweise horizontal ausgerichtet, ohne jedoch darauf beschränkt zu sein.

Um ein Befüllen der Kapillaren über ein Ende zur ermöglichen, vorzugsweise mittels Kapillarkräften, sollten die Kapillaren eine weitere Öffnung haben, aus der die Luft entweichen kann (sonst ist eine einfache Befüllung nicht möglich). Vorzugsweise handelt es sich bei der weiteren Öffnung um das zweite Ende der Kapillare. In bevorzugten Ausführungsformen des erfindungsgemäßen Trägers sind die zweiten Enden der Kapillaren mit Hilfe eines Anschlags ausgerichtet, sodass die ersten vorderen Enden vorzugsweise in einer Ebene und vorzugsweise auf einer Geraden liegen. Dieser Anschlag ist vorzugsweise so ausgebildet, dass eine Entlüftung am zweiten Ende möglich ist. Bevorzugt erlaubt der Anschlag dabei eine Positionierung der Kapillaren, ohne die zweiten Enden abzudichten. Dies wird beispielsweise durch eine Formschräge und/oder Stufe erreicht.

Vorzugsweise wird der erfindungsgemäße Träger bzw. die Kapillaren des Trägers nach dem Befüllen nicht abgedichtet, d.h. die Flüssigkeit in den Kapillaren kann möglicherweise verdampfen/verdunsten. Deshalb ist das erfindungsgemäße Messfenster vorzugsweise so weit von den Positionen, an denen die Verdunstung/Verdampfung der Flüssigkeit stattfinden kann, entfernt, dass die Messung durch diese mögliche Verdunstung/Verdampfung (die Flüssigkeitsströme induzieren kann) nicht negativ beeinflusst wird.

Mit anderen Worten, die Geometrie der erfindungsgemäßen Kapillaren ist vorzugsweise dahingehend vorteilhaft, dass die Kapillaren nicht abgedichtet werde müssen und dennoch eine sichere Messung möglich ist. Insbesondere sind die erfindungsgemäßen Kapillaren länger bzw. deutlich länger als bekannte Kapillaren in diesem Bereich. Deshalb kann bevorzugt erfindungsgemäß während einer Messzeit von bspw. durchschnittlich 2 Stunden ohne Abdichtung gemessen werden. Tests haben ergeben, dass Proben typischerweise mit ca. 4mm/Stunde Flüssigkeitssäulenverlust (=2mm/Stunde pro Ende der Kapillare) bei 45°C verdampfen. Die Lage der erfindungsgemäßen Messfenster ist weit genug vom Ende/ von den Enden der Kapillare entfernt, so dass dieser Verdunstungsverlust erfindungsgemäß nicht zu einer Entleerung des Messfensters führt. Vorzugsweise sind die erfindungsgemäßen Kapillaren zwischen 20mm und 50mm lang.

Um eine Kapillare mittels Kapillarkräften zu befüllen, kann diese in einem erfindungsgemäßen Verfahren mit der Flüssigkeit kontaktiert bzw. in diese eingetaucht werden. Dieses Kontaktieren/Eintauchen kann dazu führen, dass die Flüssigkeit nicht nur in die Kapillare eingezogen wird, sondern dass die Kapillare durch die Flüssigkeit auch auf ihrer Außenseite benetzt wird. Diese äußere Flüssigkeit/Benetzungsschicht kann in optischen Messungen zu Artefakten führen. Vorzugsweise kann deshalb verhindert werden, dass das Messfenster/der Messbereich benetzt wird. Vorzugsweise hat der erfindungsgemäße Träger deshalb einen Anschlag ("Stopper"), d.h. ein Element das verhindert, dass das Messfenster außen von der einzufüllenden Flüssigkeit benetzt/verunreinigt wird. Der 'Stopper' ist vorzugsweise multifunktional ausgebildet, wie weiter unten beschreiben, und kann gleichzeitig zur Befestigung der Kapillaren am Träger dienen. Zudem kann der Stopper sicherstellen, dass nur die Kapillaren selbst in die Kavitäten einer Mikrotiterplatte eingeführt werden, d.h., es ist nicht möglich dass aus Versehen Teile des Trägers bzw. des Trägermaterials in die Kavitäten während eines Befüllungsvorgangs gelangen und kontaminiert werden. In einer bevorzugten Ausführungsform der erfindungsgemäßen Vorrichtung funktioniert ein "Klebe-Dom", eine mechanische/geometrische Struktur die das definierte Verkleben der Kapillaren mit dem Trägermaterial erlaubt und beispielsweise zusätzlich verhindert, dass der Klebstoff verläuft, als "Benetzungs- Stopper".

Es ist bevorzugt, dass die Eintauchtiefe der Kapillaren in die Flüssigkeit, die vorzugsweise in den Kavitäten einer Mikrotiterplatte bereitgestellt wird, geeignet ist, eine ausreichende und/oder gleichmäßige Befüllung der Kapillare zu gewähren. Der erfindungsgemäße Träger ist vorzugsweise so ausgeführt, dass ein Teil bzw. Bereich der Kapillaren weit genug hervorsteht, um tief genug in die Mikrotiterplatten eintauchen zu können. Um eine einheitliche Eintauchtiefe aller Kapillaren eines Trägers in die entsprechenden Kavitäten einer Muliwellplatte zu erreichen, ist es zudem bevorzugt, dass die ersten freien zu befüllenden Enden der Kapillaren auf einer Linie, vorzugsweise einer Geraden, liegen.

Ein Vorteil des erfindungsgemäßen Trägers ist der geringe Materialverbrauch der zu analysierenden Flüssigkeit in den Kapillaren. Wenn man zum Befüllen der Kapillaren jedoch 100µl pro Well/Kavität benutzen müsste, bzw. diese immer vollständig ("bis zum Rand") befüllen müsste, würde der Materialverbrauch deutlich steigen. Erfindungsgemäß soll vorzugsweise sichergestellt werden, dass die Kapillare gut befüllbar sind, also insbesondere tief in eine Mikrotiterplatte eingetaucht werden können. Zudem ist es bevorzugt, dass die Flüssigkeit von der Mikrotiterplatte bis über das Messfenster der Kapillaren hinaus aufsteigt. Daher sind kürzere Kapillaren bevorzugt bzw. wird ein Messfenster in der Nähe des Befüllendes bevorzugt.

Mikrotiterplatten haben meistens eine Gesamthöhe von 14,4mm. Bei 384 DeepWell Storage Platten (die häufig von Pharmakonzernen benutzt werden) ist die Tiefe des Wells von der Oberkante gerechnet beispielsweise 11,5mm. Bei 96 Deep Well Storage Platten ist die Tiefe der Wells beispielsweise bis zu 20mm. Der Innendurchmesser des Wells beträgt 3,8mm, woraus sich ein Volumen von 150µl ergibt. Die 384er Low-Volume, High-Bottom Platten haben ab Oberkante Welltiefen von ca. 5,5mm (schwankt jedoch von Hersteller zu Hersteller).

Erfindungsgemäß ist es bevorzugt, dass mit den eingetauchten Kapillaren auch dann noch zuverlässig genügend Flüssigkeit mittels Kapillarkräften aufgenommen wird, wenn beispielsweise nur 20µl Volumen in der Kavität, bspw. dem DeepWell 384er (11,5mm Well-Tiefe, 150µl maximal Volumen) vorhanden ist. Vorzugsweise sind die Kapillaren deshalb so auf dem Träger befestigt, dass sie bis zum Boden des Well/der Kavität eintauchen können. Vorzugsweise ist die Vorrichtung derart ausgebildet, dass die Kapillaren (vorzugsweise nur die Kapillaren) 5mm bis 20mm tief in das Well eintauchen können, vorzugsweise 10mm bis 12mm tief, vorzugsweise bis zu 11mm tief.

Die Kapillaren dürfen beim Eintauchen in die Mikrotiterplatte nicht abbrechen. Das kann vorzugsweise dadurch verhindert werden, dass Bereiche der Mikrotiterplatte und/oder der Unterlage der Mikrotiterplatte an Kanten/Bereiche des Trägers stoßen, bevor eine Kapillare die Mikrotiterplatte bzw. an den Boden einer entsprechenden Kavität stoßen kann

Das Messfenster/der Messbereich der Kapillaren und der korrespondierende Messbereich des Trägers sollte vorzugsweise breit genug sein, so dass auch bei einer Fluoreszenzmessung mit einer Optik mit sehr hoher numerischer Apertur (NA) möglichst wenig "Autofluoreszenz" des Trägermaterials gemessen wird. Es ist daher vorteilshaft ein Träger-Material mit geringer Autofluoreszenz zu wählen. Da aber möglicherweise auch UV-Messungen (z.B. Messung der Tryptophan-Fluoreszenz, Fluoreszenz-Anregung 280nm) durchgeführt werden ist es zudem vorteilhaft, wenn der Anregungslichtkegel möglichst wenig in Kontakt mit dem Träger-Material kommt. Vorzugsweise hat der Träger eine Aussparung/Loch/Schlitz im Bereich des Messfenster/Messbereichs der Kapillaren.

Abhängig von den erwünschten Gegebenheiten kann der erfindungsgemäße Träger beispielsweise mit einer Maximalbestückung von: 4, 6, 8, 12, 16, 24, 48oder 96 Kapillaren hergestellt werden. Bevorzugt ist - insbesondere in Hinblick auf genormte Mikrotiterplatten - eine Maximalbestückung von 8, 12, 16, 24 oder 48 Kapillaren, vorzugsweise 16 oder 24 Kapillaren, besonders bevorzugt 24 Kapillaren. Bevorzugt liegt die Maximalbestückbarkeit der erfindungsgemäßen Träger in einem Bereich innerhalb der obigen Grenzen, bspw. zwischen 4 und 96 oder zwischen 12 und 48 Kapillaren. Es wird hier jedoch explizit hervorgehoben, dass die Erfindung nicht auf diese oben genannten Zahlen beschränkt ist. So ist es erfindungsgemäß auch möglich, den Träger so bereitzustellen, dass er mehr oder weniger Kapillaren halten kann. Zudem ist es auch denkbar, nicht alle auf dem Träger vorhandenen Haltevorrichtungen mit Kapillaren zu bestücken. Beispielsweise kann es wünschenswert sein, weniger Kapillaren am Träger zu befestigen, als es die Maximalbestückung des Trägers erlauben würde. Beispielsweise könnte bei einer Ausführungsform, bei der zwar eine Maximalbestückung mit 24 Kapillaren möglich ist, der Träger nur mit 12 Kapillaren bestückt sein.

Abhängig von den erwünschten Gegebenheiten kann der erfindungsgemäße Träger beispielsweise auch mit unterschiedlichen Kapillaren, beispielsweise mit Kapillaren unterschiedlichen Innendurchmessers oder unterschiedlicher Länge oder unterschiedlichen Materials und/oder unterschiedlicher innerer Beschichtung/Modifizierung, bestückt sein. Beispielsweise kann der Träger mit Kapillaren des Innendurchmessers 0,5 mm und 0,2 mm bestückt sein, beispielsweise in abwechselnder Reihenfolge (beispielsweise 0,5mm auf ungeraden Positionen, 0,2mm auf geraden Positionen). Beispielsweise kann ein erfindungsgemäßer Träger mit 24 unterschiedlichen Kapillaren bestückt sein, beispielsweise zu dem Zweck um den optimalen Kapillartyp für eine bestimmte Anwendung zu ermitteln.

Erfindungsgemäß sollte der Träger einen wohldefinierten und vorzugsweise gleichmäßigen Abstand benachbarter Kapillaren aufweisen. Der Abstand benachbarter Kapillaren wird vorzugsweise als Mitte-zu-Mitte Abstand gemessen und sollte zwischen den Kapillaren vorzugsweise ein ganzzahliges Vielfaches von etwa 2,25mm sein, vorzugsweise etwa 2,25mm oder etwa 4,5mm oder etwa 9mm. Insbesondere ist bevorzugt, dass der Abstand benachbarter Kapillaren, vorzugsweise der Mitte-zu-Mitte Abstand, innerhalb eines bestimmten Durchmessers ausgehend von einem ganzzahligen Vielfachen von 2,25mm liegt. Dieser Durchmesser ist vorzugsweise bei 96er und 384er Mikrotiterplatten 0,7mm und bei 1536er Mikrotiterplatten 0,5mm. Der Abstand benachbarter Kapillaren ist vorzugsweise derart gewählt, dass diese mit dem Raster der Kavitäten einer Mikrotiterplatte harmonisieren bzw. im Wesentlichen damit übereinstimmen.

Vorzugsweise sind die Kapillaren durchgängig durchsichtig bzw. lichtdurchlässig. Erfindungsgemäß ist es jedoch ausreichend, wenn die Kapillaren zumindest im Bereich eines Messfensters optisch transparent sind. Erfindungsgemäß wird von durchsichtig bzw. transparent gesprochen, wenn ein Großteil von Licht im Wellenlängenbereich von 200nm bis 2000nm durchgelassen wird. Damit kann beispielsweise sichergestellt werden, dass Fluoreszenzmessungen durchgeführt werden können bzw. IR-Licht (beispielsweise von einem IR-Laser) in die Flüssigkeit innerhalb der Kapillaren einkoppelt werden kann. Vorzugsweise sind die Kapillaren aus Glas, beispielsweise aus Borosilikat Glas und/oder Quartz-Glas.

Die Kapillaren haben vorzugsweise einen Innendurchmesser im Bereich von 0,01mm bis 1,0mm, vorzugsweise im Bereich 0,1mm bis 0,5mm. Vorzugsweise haben die Kapillaren eine Länge von 5mm bis 50mm, vorzugsweise von 10mm bis 40mm und bevorzugt von etwa 32mm. Je nach Anwendung können kürzere oder längere Kapillaren vorteilhaft sein. Die auf der Länge der Kapillaren basierenden Effekte werden vorzugsweise je nach gewünschter Anwendung ausgewählt. Sehr kurze Kapillaren haben beispielsweise den Vorteil, dass sie nur ein sehr kleines Volumen haben, was hinsichtlich des geringen Materialverbrauchs vorteilhaft ist (Wirtschaftlichkeit). Sehr kurze Kapillaren können vorzugsweise komplett durch Kapillarkräfte befüllt werden (wenn sie einen entsprechend angepassten Durchmesser haben). Wenn sie kurz genug sind, muss man die Kapillaren nicht einmal gegenüber der Gravitation (g) verkippen da Kapillarkräfte selbst antiparallel zu g die Kapillare komplett befüllen. Kurze Kapillaren haben auch einen Platzvorteil, man bringt so mehr Kapillaren auf einer begrenzten Fläche unter.

Sehr kurze Kapillare haben jedoch auch Eigenschaften die für einige Anwendungen weniger bevorzugt sein können. Bei offenen Kapillarenden kann beispielsweise die Flüssigkeit verdampfen. Wenn Kapillare zu kurz sind, dann kann die Flüssigkeit möglicherweise zu schnell verdampfen. Abhängig von der Messung und der verwendeten Flüssigkeit kann es vorkommen, dass die Flüssigkeit verdampft ist, bevor die Messung abgeschlossen ist. Zudem können Verdampfungsströme abhängig von der Messung zu schnell und/oder zu groß sein, wodurch beispielsweise eine Thermophoresemessung beeinflusst werden kann. Auch kann die Eintauchtiefe in Multiwellplatten zu gering sein, falls die Kapillaren zu kurz sind. Um dies auszugleichen könnten die Multiwellplatten sehr hoch mit Flüssigkeit befüllt werden, was jedoch aufgrund des damit verbundenen hohen Materialverbrauchs unwirtschaftlich sein kann.

Kapillaren mit Längen im Bereich von vorzugsweise 10mm bis 40mm, weiter bevorzugt weiter bevorzugt 15-45mm, weiter bevorzugt 25-35mm, weiter bevorzugt 20-40mm, 30-50mm, zwischen 25 bis 35mm, zwischen 30 und 35mm und weiter bevorzugt von etwa 32mm haben beispielsweise den Vorteil, dass sie sich auch bei hoch viskosen Flüssigkeiten wie Vollblut und Zell-Lysat vollständig (bei geeignetem Winkel gegen Gravitation) befüllen. Das vollständige Befüllen ist besonders vorteilhaft, da man so eine große Reproduzierbarkeit bekommt.

Wenn das Messfenster zudem im Wesentlichen in der Mitte bzw. genau in der Mitte der Kapillare angeordnet ist, dann kann beispielsweise eine 32mm lange Kapillare beispielsweise 11mm und somit weit genug in die Flüssigkeit in der Multiwellplatte eingetaucht werden, ohne dass das beispielsweise 4mm breite Messfenster außen durch die Flüssigkeit benetzt und/oder verschmutzt wird. Vorzugsweise ist das Messfenster im Träger mindestens 6mm, vorzugsweise mindestens 4mm, vorzugsweise mindestens 3mm breit, sodass die Messzone einer Thermophoresemessung in einer Kapillare weit genug entfernt ist vom Trägermaterial. Somit kann insbesondere erreicht werden, dass das Trägermaterial diese Messzone thermisch nicht oder nur unwesentlich beeinflusst. Insbesondere kann somit ein Abkoppeln des Temperaturgradienten an das Trägermaterial erreicht werden. Messfehler können so vermieden werden.

Vorzugsweise ist die Breite des Messspalts bzw. der Messaussparung zwischen 2mm-6mm, vorzugsweise zwischen 3-5mm, und weiter bevorzugt zwischen 3,5 und 4mm breit, weiter bevorzugt zwischen 3,6 und 3,8mm breit. Beispielsweise können längere Messspalte den Materialverbrauch unnötig erhöhen. Wenn beispielsweise als Auflage-Material (Trägermaterial, bzw. Teil des Trägermaterials) Aluminium verwendet wird, kann man von einer sehr großen Wärmeleitfähigkeit des Aluminiums ausgehen, und entsprechende Berechnungen als Grenzwerte verwenden. Insbesondere wird bei einer Thermophoresemessung ein Laserstrahl in die flüssige Probe, die sich in Glaskapillare befindet, eingestrahlt, um in der Probe einen Temperaturgradienten zu erzeugen. Das Aluminium des Auflage-Materials kann mit diese erzeugten Temperaturgardienten in thermische Wechselwirkung treten. Mit anderen Worten, das Aluminium saugt praktisch die Wärme aus dem durch den IR-Laser generierten Temperaturgradienten ab. Berechnungen und Messungen haben gezeigt, dass ein Abstand des Trägermaterials von mindestens 1,5 mm zum Einstrahlpunkt (Messpunkt) dahingehend vorteilhaft ist, dass der erzeugte Temperaturgradient dann nicht mehr übermäßig vom Auflagematerial beeinflusst wird. Da das Messfenster erfindungsgemäß vorzugsweise an zwei Seiten von Auflagematerial begrenz wird, ist es vorteilhaft (2 x 1,5mm = 3mm) das Messfenster mindestens 3mm breit zu machen, wenn die Kapillaren beidseitig aufliegen, um unbeeinflusste Thermophorese Messungen ("thermo-optical particle characterisation") durchführen zu können.

Zudem ist gemäß dieser Ausführungsform die Verdampfung symmetrisch und so gering bzw. weit genug weg vom Messfenster, so dass man selbst bei 45°C noch 1 Stunden lang in den Kapillaren messen kann, ohne die Kapillaren abdichten zu müssen (entsprechend bei niedrigeren Temperaturen länger). Das ist vom Handling her und wirtschaftlich ein großer Vorteil.

Die oben genannte bevorzugte Kapillarlänge erlaubt es zudem auch praktisch in der Ebene zwei der erfindungsgemäßen Kapillar-Chips (Kapillar-Array) mit je 24 Kapillaren genau auf einer Fläche unterzubringen die im Wesentlichen dem "Footprint" (Grundrissfläche) einer Multiwellplatte entspricht. Vorzugsweise betragen die Abmessungen (Länge×Breite×Höhe) einer Multiwellplatte gemäß ANSI-Standard auf Empfehlung der Society for Biomolecular Screening (SBS) 127,76 mm×85,48 mm×14,35 mm. Stapelt man beispielsweise die erfindungsgemäßen Kapillar-Chips mit je 8 Kapillar-Chips hoch, erhält man 2 Stapel mit je 8 Kapillar-Chips auf den Footprint (der Fläche) einer Multiwellplatte unter. Das sind 16 Kapillar-Chips a 24 Kapillaren = 384 Kapillaren; das entspricht genau der Well-Anzahl einer 384er Multiwellplatte. Man kann die Kapillar-Chips also so verpacken / handhaben, dass der Nutzer genau in seiner "384er Multiwellplatten-Denkweise" bleiben kann, also seine Gewohnheiten beibehalten kann.

Wenn man die Kapillar-Chips so stapelt (siehe "Stapelbarkeit der Träger") kommt man bei einem 8er Stapel der Kapillar-Chips inklusive eines Deckels auch auf eine Höhe, die von vielen Standard "Plattenhotels" und Labor-Robotem /Automaten gehandhabt werden kann.

Die Kapillaren haben vorzugsweise einen Außendurchmesser von 0,05mm bis 2mm, vorzugsweise 0,2mm bis 1mm, bevorzugt 0,2mm bis 0,65mm. Zudem ist es bevorzugt, dass der Träger derart ausgestaltet ist, dass auch Kapillaren mit unterschiedlichen Durchmessern auf dem Träger befestigt werden können. Beispielsweise können auf einem erfindungsgemäßen Träger sowohl Kapillare mit einem Außendurchmesser von 0,6mm als auch 1mm daran befestigt werden. Dies kann insbesondere durch eine Ausführung mit zwei Stegen quer zu den Kapillaren, wie unten beschrieben, erfolgen.

Gemäß weiteren bevorzugten Ausführungsformen können die Innenseiten/Innenwände von einzelnen oder allen Kapillaren chemisch, physikalisch bzw. strukturell modifiziert sein. Insbesondere kann diese Modifikation dazu verwendet werden, hydrophobe und/oder hydrophile Eigenschaften und/oder die Kapillarkräfte gezielt zu verändern oder zu steuern. Auf diese Weise kann beispielsweise die Oberflächenspannung und/oder das Anhaften von Biomolekülen und/oder Lösungen verändert bzw. gesteuert werden.

Gemäß der vorliegenden Erfindung können die Innenwände der röhrenförmigen Struktur auch kovalent und/oder nicht-kovalent und/oder durch Adsorption, mit Polymeren, mit Silanen, Biomolekülen, Aminosäuren, Antikörpern, Proteinen, Nukleotiden, Oligonukleotiden, DNA , RNA, PNA, LNA, Peptiden, Antigenen, Polysaccharosen, PEG, Dextran, Polyacrylsäure, Antifouling-Stoffe, Nanopartikel, L-Lysin, Poly-L-Lysin, Aptameren, Dendrimeren, Zellen, Lipiden, und dergleichen modifiziert werden. Der Fachmann versteht, dass der Begriff "Modifikation" oder "Veränderung" auch den Prozess der Immobilisation einschließt. Die Modifikationen bzw. Veränderungen können auch räumlich unterschiedlich sein, beispielsweise können die Veränderungen einem Muster oder Gradienten folgen.

Erfindungsgemäß sind die Kapillaren am Träger mechanisch befestigt, beispielsweise aufgeklebt und/oder aufgeklemmt bzw. eingeklemmt. Alternative bzw. zusätzliche Ausführungsformen zum Befestigen der Kapillaren sind: Heißprägen, Einstecken (Kapillare werden in den Träger gesteckt) und Fixierung durch einen Niederhalter. Die Kapillaren können auch in den Träger eingespritzt sein (beim Spritzguss mit eingegossen werden). Vorzugsweise sind die mechanischen Mittel zum befestigen der Kapillaren am Träger so ausgestaltet, dass auch Kapillaren mit unterschiedlichen Außendurchmessern auf ein und demselben Träger sicher befestigt werden können, beispielsweise Kapillaren mit Außendurchmesser von 0,6 und 1mm. Die mechanische Fixierung der Kapillaren am Träger erleichtert die Handhabung, insbesondere die automatisierte Handhabung. Zudem wird durch die mechanische Fixierung eine kostengünstige und sichere Verbindung zwischen Kapillaren und Träger erreicht, was in Hinblick auf die Prozesssicherheit vorteilhaft ist. So ist es beispielsweise unwahrscheinlich, während der Handhabung eine Kapillare zu verlieren oder zu beschädigen.

Um Artefakte bei einer optischen Messung zu verringern bzw. zu verhindern weist das Material der Kapillaren und/oder des Trägers vorzugsweise eine geringe Autofluoreszenz auf, vorzugsweise zumindest in dem Teilbereich der Kapillare in dem optisch gemessen wird (Messfenster).

Zudem ist es bevorzugt, dass der Träger eine hohe thermische Leitfähigkeit aufweist. (Temperierung der Kapillaren über Kontakt mit Trägermaterial). Gemäß weiteren Ausführungen kann es aber auch bevorzugt sein, dass der Träger aus einem Material mit einer geringeren thermischen Leitfähigkeit hergestellt ist, beispielsweise kann hier die Temperierung der Kapillaren über ein Luftpolster erfolgen.

Für eine Automatisierung kann es zudem vorteilhaft sein, wenn der Träger Flächen und/oder Strukturen für das Greifen und/oder Bewegen durch einen Roboter aufweist. Beispielsweise kann der Träger auf mindestens einer Seite, vorzugsweise an zwei (gegenüberliegenden) Seiten Schrägen aufweisen, die von einer entsprechenden Passform (Formschluss) in einem Robotikgreifer gefasst werden können.

Vorzugsweise weist der Träger Flächen (Griffflächen) auf, die eine händische/manuelle Handhabung erleichtern.

Gemäß weiterer Ausführungsformen kann es zudem vorteilhaft sein, mehrere Träger in einer Halterung (Tray) zusammenzufassen. Vorzugsweise können mehrere Träger aneinander übereinander gekoppelt werden können, ähnlich einem "Aufeinanderbauen von Lego®-Bausteinen". Alternativ oder zusätzlich können mehrere Träger auch aneinander nebeneinander gekoppelt werden.

Vorzugsweise kann der Träger nicht nur zum sicheren Fixieren der Kapillaren in einem gewünschten Abstand zueinander dienen, sondern kann vorzugsweise auch eine Schutzfunktion für die Kapillaren erfüllen. Beispielsweise kann der Träger einen (klappbaren) Rahmen aufweisen, der vor bzw. über den Kapillaren angebracht werden kann.

Gemäß einer weiteren Ausführungsform kann der erfindungsgemäße Träger auch mit einer Transportsicherung versehen sein.

Gemäß einer weiteren Ausführungsform können die einzelnen Kapillaren bzw. Gruppen von Kapillaren individuell beschriftet werden, vorzugsweise mit einer Nummerierung von 1 bis 16, von 1 bis 24, von A-P oder von A-X.

Gemäß einer weiteren Ausführungsform sind die einzelnen Träger kodiert, beispielsweise elektronisch und/oder optisch kodiert. Vorzugsweise mit einem Datamatrix-Code und/oder RFID. Auch kann der Träger eine Fläche zur Beschriftung aufweisen (z.B. klassische Angaben wie Chargennummer oder Haltbarkeit, aber auch Markierungen mit Hand für Notizen). Zur Unterscheidung einzelner Träger können diese auch farblich (unterschiedlich) gestaltet werden. Auch ist eine Zuordnung zu einem Unternehmen durch Aufbringen eines Unternehmens-Logo in/auf dem Träger möglich.

In einer weiteren Ausführungsform, wird ein Träger aus verschiedenen Modulen kombiniert, z.B. kann ein Träger mit 24 Kapillaren dadurch erstellt werden, dass drei Träger mit je 8 Kapillaren zu einem einzigen Träger kombiniert werden.

Gemäß weiterer Ausführungsformen kann der Träger aus hochtemperaturfestem Kunststoff hergestellt sein, was den Vorteil hat, dass der Träger auch bei extrem niedrigen und/oder hohen Temperaturen gemessen werden kann (z.B. Schmelzkurvenmessung). Durch spezielle Materialien, beispielsweise hochfeste Kunststoffe kann auch eine Verwindung des Trägers verhindert werden. Formgebende Elemente können zudem für eine genaue Positionierung innerhalb des dafür vorgesehenen Messgerätes sorgen (z.B. Verdrehsicherung).

In einer bevorzugten Ausführungsform wird der Träger mittels Spritzgussverfahren hergestellt. Weitere beispielhafte Herstellungsverfahren sind Prägen, Stanzen, Ausschneiden, Fräsen, Drucken, und/oder Sintern.

Die Kapillaren können aus Glas und/oder einem Polymer und/oder zumindest einem der Elemente aus Borosilikatglas, Borosilikat-3.3- Glas (zum Beispiel Duranglas), Quarzglas wie Suprasil-, Infrasil-, synthetisch hergestelltes Quarzglas, Kalknatronglas, Bk-7-, ASTM Type 1 Klasse A Glas, ASTM Type 1 Klasse B Glas hergestellt sein. Die Polymere können enthalten: PTFE, PMMA, Zeonor™, Zeonex™, Teflon AF, PC, PE, PET, PPS, PVDF, PFA, FEP und/oder Acrylglas.

Insbesondere ist es bevorzugt, dass zumindest ein Bereich der Kapillaren für Licht der Wellenlänge von 200nm bis 1000nm, vorzugsweise von 250nm bis 900nm transparent ist. Insbesondere bevorzugt, aber nicht darauf beschränkt, ist dieses mindestens eine Segment auch für Licht der folgenden Wellenlängenbereiche transparent: von 940nm bis 1040nm (vorzugsweise 980nm +/-10nm), von 1150nm bis 1210nm, von 1280nm bis 1600nm (vorzugsweise 1450nm +/-20nm und/oder 1480nm +/-20nm und/oder 1550nm +/-20nm), von 1900nm bis 2000nm (vorzugsweise 1930nm +/-20nm). Der Fachmann versteht, dass der/die transparente(n) Bereich(e) sich auch über die gesamte röhrenförmige Struktur erstrecken kann/können. Mit anderen Worten, die Kapillare kann transparent sein.

Die Lichtdurchlässigkeit des Segments erlaubt die Durchführung von Lumineszenz/Fluoreszenz/Phosphoreszenz-Messungen und/oder optischen Untersuchung/Messungen (beispielsweise Interferenz, Polarisation, Absorption, Dichroismus, Ellipsometrie, Anisotropie, Raman, Mikroskopie, Dunkelfeld, Lichtstreuung, FRET) und/oder Manipulationen der Lösung/der Flüssigkeit und/oder des Gases (Fluids) in der Kavität der röhrenförmigen Struktur. Die Lichtdurchlässigkeit kann ferner die Durchführung von Fluoreszenzmessungen erlauben. Gemäß einer bevorzugten Ausführungsform ermöglicht sie ebenfalls die Erwärmung von Fluiden in der röhrenförmigen Struktur mittels elektromagnetischer Strahlung, beispielsweise Licht (vorzugsweise einem Infrarot(IR)-Laser), vorzugsweise die Erwärmung von Wasser und/oder organischen Lösungsmitteln.

Beispielhafte Materialien für den Träger sind Polymere, vorzugsweise Polypropylen, und/oder Metall und/oder Halbleiter (beispielsweise Silizium), und/oder Materialien, die vorzugsweise mindestens eins der Elemente der folgen Gruppe aufweisen: Polymermaterial, am meisten bevorzugt Polypropylen, Acrylnitril-Butadien-Styrol (ABS), Polykarbonat (PC), Polyamid (PA), Polybutylenterephthalat (PBT), Polyethylenterephtalat (PET), Cyclo-Olefin-Copolymere (COC), Polyethylenoxid (PPO), Polysulphon (PSU), Polyetherketon (PEK), Polyetheretherketon (PEEK), Polyphylensulfid (PPS), Polyoximethylen-Kunststoffe (POM), Polylaktid (PLA) und Polyvinylalkohl-Kunsstoffe (PVA).

Bevorzugte Ausführungsformern der vorliegenden Erfindung bzw. bevorzugte Merkmalskombinationen der vorliegenden Erfindung werden in den folgenden beispielhaften Aspekten beschrieben:
1. Träger mit mehreren Kapillaren, die in einer Ebene angeordnet sind und mechanisch am Träger befestigt sind, und wobei zumindest ein erstes freies Ende jeder Kapillare über den Träger derart hervorsteht, dass die freien Enden der Kapillaren gleichzeitig in Kavitäten einer Mikrotiterplatte eingeführt werden können. Vorzugsweise werden der Träger bzw. die Kapillaren des Trägers als Behälter für Proben verwendet, die durch Thermophoresemessungen untersucht werden.
2. Träger nach Aspekt 1, wobei der Abstand benachbarter Kapillaren etwa 2,25mm oder ein ganzzahliges Vielfaches davon beträgt,
3. Träger nach Aspekt 1, wobei das erste freie Ende 3mm bis 20mm, vorzugsweise 10mm bis 12mm, vorzugsweise 11mm über den Träger hervorsteht und/oder wobei das erste freie Ende über den Träger hervorsteht, das es 3mm bis 20mm, vorzugsweise 10mm bis 12mm, vorzugsweise 11mm in eine Kavität einer Mikrotiterplatte eingeführt werden kann. Erfindungsgemäß sollen vorzugsweise nur die freien Kapillaren über den Träger so hervorstehen, dass sichergestellt wird, dass beim Eintauchen dieser freien Enden in die Kavitäten einer Mikrotiterplatte tatsächlich nur die Kapillaren in die Kavitäten eingeführt werden.
4. Träger nach einem der vorhergehenden Aspekte, wobei die Kapillaren auf dem Träger derart befestigt sind, dass ein zweites Ende der Kapillaren derart offen ist, das Luft entweichen kann, vorzugsweise wenn das erste freie Ende mit Flüssigkeit befüllt wird bzw. zum Befüllen in eine Flüssigkeit eingetaucht wird.
5. Träger nach einem der vorhergehenden Aspekte der an mindestens einer Seite, vorzugsweise beiden Seiten, eine/mehrere Grifffläche(n) und/oder Positionierhilfe(n) für ein automatisches Handling aufweist.
6. Träger nach Aspekt 5, wobei die Positionierhilfe für ein automatisiertes Ergreifen bzw. Führen eingerichtet ist und vorzugsweise mindestens einen keilförmig ausgebildeten Abschnitt aufweist, vorzugsweise zwei keilförmig ausgebildete Abschnitte.
7. Träger nach Aspekt 6, wobei der/die keilförmige(n) Abschnitt(e) jeweils mindestens zwei schräg aufeinander zu- bzw. voneinander weg laufende Flächen aufweist und wobei, bevorzugt, die keilförmigen Abschnitte unterschiedlich orientiert sind, beispielsweise quer zueinander ausgebildet sind.
8. Träger nach einem der vorhergehenden Aspekte, wobei der Träger mindestens zwei Stege aufweist, die bevorzugt im Wesentlichen parallel zueinander verlaufen, die sich bevorzugt im Wesentlichen quer zur Längsachse der Kapillaren erstrecken, und die bevorzugt voneinander beabstandet sind. Gemäß einer bevorzugten Ausführungsform kann der vordere Steg auch als Anschlag mit einer Mikrowellplatte dienen, um die Kapillare, vorzugweise nur die Kapillare, in der gewünschten voreingestellten Länge in die Kavitäten einer Mikrotiterplatte einzuführen.
9. Träger nach einem der vorhergehenden Aspekte, wobei die Kapillaren jeweils an mindestens zwei Punkten bzw. Bereichen am Träger befestigt sind, wobei vorzugsweise ein Punkt auf dem ersten Steg und ein Punkt auf dem zweiten Steg liegt.
10. Träger nach einem der vorhergehenden Aspekte, wobei der Träger einen hinteren Steg aufweist, der vorzugsweise einen Anschlag zum Zusammenwirken mit den Kapillaren aufweist.
11. Träger nach einem der vorhergehenden Aspekte, wobei der Träger eine Messaussparung aufweist, sodass die Kapillare mit Licht von einer Lichtquelle, die im Wesentlichen Senkrecht zur gemeinsamen Ebene Licht abstrahlt, durchleuchtet bwz. beleuchtet werden können, vorzugsweise in einem mittleren Bereich zwischen dem ersten und dem zweiten Ende der Kapillare. Vorzugsweise sollte die Messaussparung groß genug sein, um einerseits eine optische Messung durchführen zu konnen und/oder groß genug sein, damit der eigentliche Messbereich der Kapillare weit genug von Material des Trägers entfernt sein, um eine thermische beeinflussung dieses Messbereichs durch den Träger zu vermeiden bzw. so gering wie möglich zu halten. Vorzugsweise ist die Messaussparung zwischen 2mm-6mm, vorzugsweise zwischen 3-5mm, und weiter bevorzugt ca. 4mm breit.
12. Träger nach Aspekt 11, wobei die Messaussparung zwischen den beiden Stegen ausgebildet ist.
13. Träger nach einem der vorhergehenden Aspekte, wobei der Träger einen Temperierbereich, vorzugsweise zwei Temperierbereiche aufweist, die bevorzugt eine individuelle oder gemeinsam Temperierung einer oder mehrerer Kapillaren ermöglichen.
14. Träger nach Aspekt 13, wobei der Temperierbereich zwischen einem der beiden Stege und dem hinteren Steg und zwischen einem der beiden Stege und dem freien Ende ausgebildet ist.
15. Träger nach einem der vorhergehenden Aspekte, wobei das erste freie Ende jeder Kapillare über den Träger hervorsteht, indem es über einen der Stege hervorsteht, insbesondere über den äußeren, dem freien Ende zugewandten Steg.
16. Träger nach einem der vorhergehenden Aspekte, wobei das erste freie Ende jeder Kapillare über den Träger hervorsteht bzw. frei von diesem beabstandet ist.
17. Träger nach einem der vorhergehenden Aspekte, wobei äußere Bereiche des Trägers, vorzugsweise der Griffbereiche, verbindende imaginäre Linie (A) von den ersten Enden (11) der Kapillaren nach außen beabstandet ist, vorzugsweise um 2mm, vorzugsweise derart, dass die Kapillaren die imaginäre Linie (A) nicht schneiden.
18. Träger nach einem der vorhergehenden Aspekte, wobei die Mikrotiterplatte eine Standard 96er, 384 oder 1536er Mikrotiterplatte ist.
19. Träger nach einem der vorhergehenden Aspekte, wobei der Träger mit 4, 6, 8, 12, 16, 24, 48 oder 96 Kapillaren bestückt ist.
20. Träger nach einem der vorhergehenden Aspekte, wobei die Kapillaren einen Innendurchmesser im Bereich von etwa 0,01mm bis etwa 1,0 mm, vorzugsweise im Bereich von 0,1mm bis etwa 0,5mm haben und/oder eine Länge von etwa 5mm bis etwa 50mm, vorzugsweise von etwa 10mm bis etwa 40mm und bevorzugt etwa 32mmhaben.
21. Träger nach einem der vorhergehenden Aspekte, wobei die mechanische Befestigung zwischen Kapillare und Träger mindestens eine Verbindung ist aus der Gruppe bestehend aus: Klebung, Clipbefestigung, Klemmung, Pressung.
22. Träger nach einem der vorhergehenden Aspekte, wobei der Träger einen oder mehrere Durchbrüche zur exakten Positionierung und Führung des Trägers aufweist.
23. Träger nach einem der vorhergehenden Aspekte, wobei der Träger vorzugsweise mittels Spritzgussverfahren, Prägen, Stanzen, Ausschneiden, Fräsen, Drucken, und/oder Sintern hergestellt wird.
24. Träger nach einem der vorhergehenden Aspekte, wobei der Träger eindeutig gekennzeichnet werden kann, vorzugsweise mit mindestens einem der Folgenden Verfahren: Beschriften, Farbgestaltung, Barcode, 2D Barcode, DataMatrix Code, RFID.
25. Träger nach einem der vorhergehenden Aspekte, wobei der Träger und die Kapillare einstückig hergestellt sind.
26. Träger nach einem der vorhergehenden Aspekte, wobei sich der Innendurchmesser mindestens einer der mehreren Kapillaren, vorzugsweise aller Kapillaren, zum ersten freien Ende und/oder zum zweiten Ende der Kapillare hin verkleinert.
27. Kit mit einem Träger nach einem der vorherstehenden Aspekte und einem Tray zur Aufnahme mindestens eines Trägers, vorzugsweise zur Aufnahme mehrerer Träger.
28. Kit nach Aspekt 27, wobei das Tray Einrichtungen, vorzugsweise Vorsprünge aufweist, zum Positionieren des bzw. der Träger(s).
29. Verfahren zum Befüllen mehrerer Kapillaren in einem Träger, insbesondere nach einem der vorherstehenden Aspekte, wobei die mehreren Kapillaren gleichzeitig mit Hilfe von Kapillarkräften befüllt werden, indem die ersten freien Enden der Kapillaren gleichzeitig in Kavitäten einer Mikrotiterplatte eingeführt werden.
30. Verfahren zum Befüllen mehrerer Kapillaren in einem Träger nach einem der vorherstehenden Aspekte, wobei mehrere der mehreren Kapillaren gleichzeitig mit Hilfe einer Mehrkanal-Pipette über die ersten freien Enden befüllt werden.
31. Verfahren zum Befüllen mehrerer Kapillaren in einem Träger nach einem der vorherstehenden Aspekte, wobei die mehreren Kapillaren nacheinander mit Hilfe einer Einzelkanal-Pipette über die ersten freien Enden befüllt werden.
32. Verfahren zum Befüllen mehrerer Kapillaren nach einem der Aspekte 29 bis 31, wobei der Träger und/oder die Kapillaren während des Befüllens schräg zwischen einer horizontalen und vertikalen Position oder vertikal bezüglich der Gravitation ausgerichtet ist/sind.
33. Verfahren nach einem der Aspekte 29 bis 32, wobei das Verfahren unter Verwendung eines Kits nach einem der Aspekte 27 oder 28 ausgeführt wird.
34. Verfahren nach einem der Aspekte 29 bis 33, wobei das Verfahren automatisiert ausgeführt wird.
35. Verfahren nach einem der Aspekte 29 bis 33, wobei das Verfahren zumindest einen die folgenden Schritte aufweist, der automatisiert durchgeführt wird:
   1. Entnahme eines Trägers nach einem der Aspekte 1 bis 26 aus einer Verpackung/Magazin
   2. Transport des Trägers zu einer Befüllposition
   3. Befüllung des Trägers
   4. Transport des befüllten Trägers zu einem Tray/einer Messvorrichtung
   5. Ablage auf dem Tray/in der Messvorrichtung
   6. Durchführen eines Messvorgangs
   7. Entnahme des Arrays/Trays aus der Messvorrichtung und Transport zu einem Lagerbehälter (z.B. Müllbox oder Zwischenlager).
36. Befüllstation zum Befüllen der Kapillaren eines Trägers nach einem der Aspekte 1 bis 26, wobei die Befüllstation eine Aufnahme für den Träger aufweist und der Träger vorzugsweise in einem Winkel zwischen 0° bis 180° gegenüber der Gravitationskraft verkippt ist.
37. Befüllsation nach Aspekt 36, wobei die Aufnahme verstellbar ist, so dass der Träger in einem erwünschten Winkel zur Gravitationskraft ausrichtbar ist.
38. Befüllstation nach Aspekt 36 oder 37, wobei die Befüllstation eine Aufnahme zur Aufnahme einer Mikrotiterplatte aufweise, wobei die Mikrotiterplatte verkippt in Bezug auf die Gravitationskraft ausrichtbar ist, vorzugsweise um den gleichen Winkel wie der Träger verkippbar ist.
39. Temperiervorrichtung zum Temperieren der Kapillaren eines Trägers nach einem der Aspekte 1 bis 26, wobei die Temperiervorrichtung einen Temperierkörper (50) mit voneinander beabstandeten Temperrierrippen (55) aufweist, und der Träger (20) so auf den Temperierkörper gelegt werden kann, dass zumindest eine, vorzugsweise mehrere der Temperierrippen (55) zwischen den Kapillaren liegen.
40. Temperiervorrichtung nach Aspekt 39, wobei die vorzugsweise wobei die Kapillaren durch ein temperierte Luftpolster zwischen den Temperierung-Rippen und dem Deckel geheizt/gekühlt werden.
41. Träger nach einem der vorhergehenden Aspekten 1-26, wobei am Träger (20) Stapelelement vorhanden sind, vorzugsweise mindestens ein nach unten hervorstehender Zahn (101, 102, 103) von der Unterseite des Trägers (20) und mindestens ein auf der Oberseite des Trägers (20) ausgebildete Aussparung zur Aufnahme eines entsprechenden Zahns.
42. Träger nach Aspekt 41, wobei der Abstand (b) zwischen zwei Kapillaren (11) zweier aufeinander gestapelter Träger (20) im Wesentlichen 4,5 mm beträgt.

### KURZE BESCHREIBUNG DER ZEICHNUNGEN

Im Folgenden werden bevorzugte Ausführungsformen der vorliegenden Erfindung unter Bezugnahme auf die Figuren ausführlich beschrieben. Es zeigen:
- Figuren 1A und 1B: eine Seitenansicht und eine Draufsicht eines erfindungsgemäßen Trägers mit 24 daran befestigten Kapillaren;
- Figuren 1C und 1D: schematische Details bevorzugter Anschläge der Kapillaren am Träger;
- Fig. 2A: eine perspektivische Ansicht des Trägers der Fig. 1;
- Fig. 2B: eine Teilansicht eines Griffbereichs des Trägers der Fig. 2A;
- Fig. 2C: Details einer Greiffläche für Handlingssysteme/Roboter
- Fig. 3A: eine weitere schematische perspektivische Ansicht des Trägers der Fig. 2A;
- Fig. 3B: vier erfindungsgemäße Träger in einem erfindungsgemäßen Tray;
- Fig. 3C: einen erfindungsgemäßen Träger in einem erfindungsgemäßen Tray gemäß einer weiteren Ausführungsform;
- Fig. 3D: eine erfindungsgemäße Befüllstation mit einem schräg daran angebrachten Träger, dessen Kapillaren manuell mit einer Pipette befüllt werden;
- Figuren 4A bis 4D: Beispiele für die mechanische Befestigung der Kapillaren an dem erfindungsgemäßen Träger;
- Fig. 5: Verfahrensschritte zum Befüllen erfindungsgemäßer Träger;
- Figuren 6A und 6B: eine Seitenansicht und eine Draufsicht eines alternativen erfindungsgemäßen Trägers mit 24 daran befestigten Kapillaren;
- Figuren 7A und 7B: eine perspektivische Ansicht einer alternativen Ausführung des Trägers, hier beispielhaft nach Figur 6, mit unter anderem einem Anschlag 13' in Form einer Vertiefung bzw. Tasche;
- Figur 7C: ein bevorzugtes Detail einer Greiffläche für Handlingssysteme/Roboter, hier beispielhaft für die Ausführungsform nach Figuren 6 oder 7A und B;
- Figur 8: ein schematisch perspektivisches Beispiel für automatisiertes Handling, wobei Figur 8A ein Ende eines Trägers mit einem Griffbereich 3 zeigt und Figur 8B diese Ende mit einem Greifer eines Handlingsystems und Figur 8C eine Komplettansicht eines Trägers mit sich im Eingriff befindenden Greifern;
- Figur 9: eine Temperiervorrichtung mit der die Kapillaren eines erfindungsgemäßen Trägers temperiert werden können, wobei Figur 9A den Träger getrennt von der Temperiervorrichtung zeigt, Figur 9B den Träger in Eingriff mit der Temperiervorrichtung zeigt, Figur 9C eine Detailansicht der Figur 9B ist und Figur 9C eine Schnittansicht entlang der Linie A-A der Figur 9C zeigt;
- Figur 10: eine Verkippung einer Kapillare und eines Trägers darstellt, wobei die Befüllung der Kapillare in Bezug auf die Gewichtskraft veranschaulicht wird;
- Fig. 11: eine perspektivische Ansicht einer weiteren alternativen Ausfuhrungsform des Trägers von unten;
- Fig. 12: eine Teilansicht mehrerer gestapelter Träger gemäß der Ausführungsform der Fig. 11 von unten;
- Fig. 13: eine Vorderansicht von acht gestapelten Trägern gemäß der Ausführungsform der Figuren 11 und 12 mit Blick auf die Vorderseite der Kapillaren;
- Fig. 14: eine Seitenansicht der acht gestapelten Träger der Fig. 13; und
- Fig. 15: eine Detailansicht einer Ausgestaltung der Formen des Trägers, um eine sichere Stapelbarkeit zu erreichen.

### DETAILLIERTE BESCHREIBUNG BEVORZUGTER AUSFÜHRUNGSFORMEN

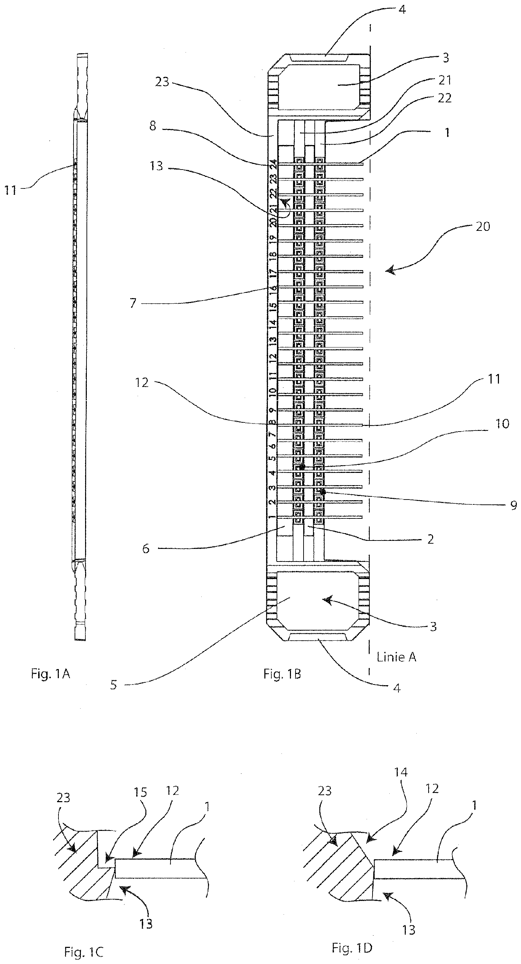

Figur 1B zeigt schematisch eine beispielhafte Ausführungsform eines erfindungsgemäßen Trägers 20 in einer Draufsicht. An dem Träger sind 24 Kapillaren 1 mit einem gleichmäßigen Abstand von etwa 4,5mm in einer gemeinsamen Ebene befestigt, wobei die gemeinsame Ebene hier parallel zur bzw. in der Papierebene liegt. Insbesondere wird die gemeinsame Ebene in der Seitendarstellung der Fig. 1A ersichtlich. Der Träger hat im Wesentlichen zwei, vorzugsweise in etwa parallel verlaufende, Befestigungsstreben 21, 22. Vorzugsweise ist jede Kapillare 1 an beiden Befestigungsstreben befestigt, d.h. jede Kapillare ist zumindest an zwei voneinander beanstandeten Punkten 9, 10 am Träger befestigt, wodurch ein sichere Befestigung erreicht wird. Die beiden Befestigungsstreben 21, 22 sind bevorzugt voneinander beabstandet. Vorzugsweise liegt zwischen den beiden Befestigungsstreben der Messspalt/das Messfenster 2, der/das ermöglicht, dass senkrecht zur gemeinsamen Ebene Licht durch die einzelnen Kapillaren durchgestrahlt werden kann. Beispielsweise erlaubt es der Messspalt/das Messfenster 2 optische Messungen, beispielsweise Fluoreszenzmessungen, vorzugsweise Microsale Thermophoresis Messungen durchzuführen.

Vorzugsweise ist der Messspalt bzw. das Messfenster 2 bezüglich der beiden Enden der Kapillare 1 in der Mitte angeordnet, d.h., es besteht vorzugsweise eine Symmetrie hinsichtlich des Messfensters und der Kapillarlänge. Beispielsweise wird der erfindungsgemäße Träger für Thermophoresemessungen verwendet. Thermophorese ist ein Transportprozess für Partikel bzw. Biomoleküle. D.h. dieser Transportprozess kann auch von anderen Transportprozessen beeinflusst werden. Andere Transportprozesse sind beispielsweise Ströme in der Flüssigkeit in der Kapillare die durch das Verdampfen der Flüssigkeit an den Kapillarrändern hervorgerufen werden können. Somit können beispielsweise zumindest 2 Flüssigkeitsströme existieren, wobei Partikelströme in Richtung der Kapillarenden hervorgerufen durch die Verdampfung prinzipiell einen negativen Einfluss auf Thermophorese Messungen haben können. Wenn man vorzugsweise im Wesentlichen in der Mitte bzw. genau in der Mitte der Kapillare die Messungen macht (Symmetrie!), können sich die beiden entgegengesetzten Verdampfungsströme zu null addieren, wodurch eine ungestörte Thermophoresemessung ermöglicht wird.

Auch hinsichtlich der Temperierung der Kapillaren bzw. der Lösung in den Kapillaren ist ein Messfenster genau in der Mitte vorteilshaft da man so auch wieder Symmetrie-Effekte ausnutzen kann. Auch hinsichtlich der Befüllung ist das vorteilshaft. Egal ob man von "vome" (=freies Ende) oder von "hinten" (Ende das in den Träger ragt) befüllt, die Flüssigkeit muss immer den gleichen Weg bis zum Messfenster nehmen. D.h. beide Befüllvorgänge sind miteinander vergleichbar. Während des Einfüllens und des damit verbundenen erstmaligen Benetzens der Kapillarwände mit der Flüssigkeit bleiben oft Biomoleküle/Partikel an der Kapillarwänden hängen/kleben, d.h. man "verliert" auf dem Weg zum Messfenster möglicherweise frei in Lösung schwimmende Biomoleküle/Partikel. Bei gleicher Weglänge verliert man im Mittel gleich viele Biomoleküle/Partikel, deshalb ist die Symmetrie auch hinsichtlich der Befüllung vorteilhaft.

An den (in der Zeichnung oberen und unteren) Enden der Befestigungsstreben 21, 22 sind vorzugsweise Griffbereiche 3 vorhanden. Diese dienen einerseits zur Greifen des Trägers durch einen Benutzer und verbinden zudem die beiden Befestigungsstreben fest miteinander. Zudem können die Griffbereiche 3 auch so geformt sein bzw. entsprechende Einrichtungen aufweisen, dass ein automatisiertes Greifen des Trägers ermöglicht bzw. erleichtert wird. Insbesondere ist mit der Bezugsziffer 4 eine Einrichtung bzw. Führung für ein automatisiertes Ergreifen bzw. Führen vorgesehen. Die Griffbereiche 3 weisen zudem bevorzugt einen Beschriftungsbereich 5 auf, auf den handschriftlich oder maschinell Informationen aufgebracht werden können.

Der Träger ist derart ausgebildet, dass die Kapillaren von einer Seite (in Figur 1B die rechte Seite, in Figur 1A die dem Betrachter zugewandte Seite) befüllt werden können. Diese Seite wird auch als 'vordere' Seite bezeichnet. Die gegenüberliegende Seite des Trägers (in Figur 1B die linke Seite bzw. in Figur 1A die nicht sichtbare, dem Betrachter abgewandte Seite) wird auch als ,Rückseite, bzw. 'hintere' Seite bezeichnet. Entsprechende Termini werden in Bezug auf die im Träger angeordneten Kapillaren verwendet.

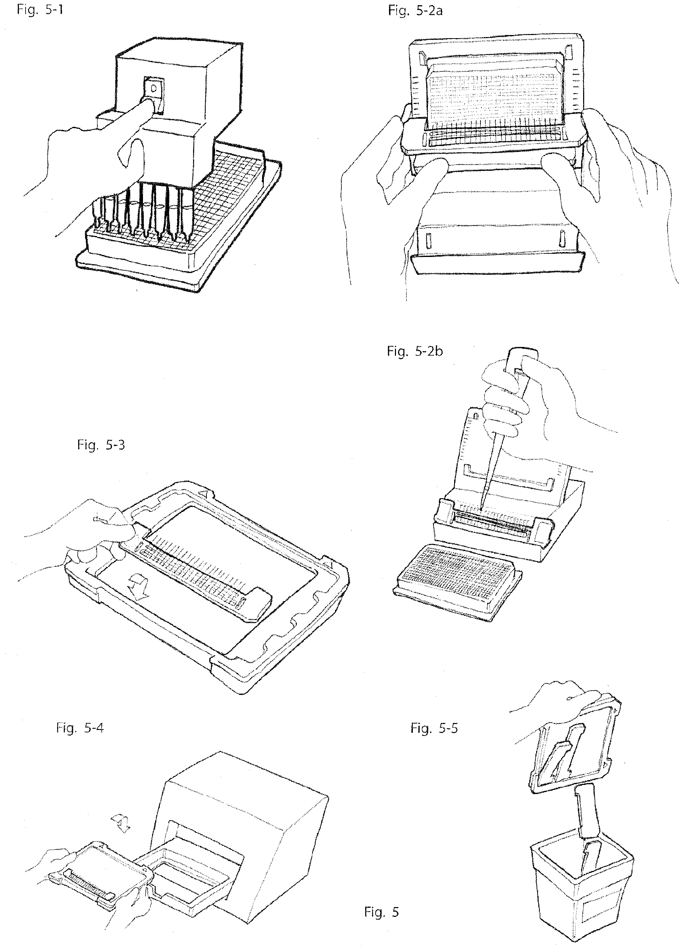

Die beiden Enden einer Kapillare 1 werden im Folgenden als erstes freies bzw. vorderes Ende 11 (rechtes Ende in Figur 1B) bezeichnet und als zweites bzw. hinteres Ende 12 (linkes Ende in Figur 1B) bezeichnet. Die ersten vorderen Enden stehen vorzugsweise etwa 11mm über den Träger, genauer gesagt über die vordere (rechte) Befestigungsstrebe 22 des Trägers hervor, sodass diese Enden gleichzeitig derart in Kavitäten einer Mikrotiterplatte eingeführt werden können, dass ein Befüllen der Kapillaren ermöglicht wird (siehe beispielsweise Fig. 5-2a). Vorzugsweise liegen mehrere, vorzugsweise alle vorderen Enden 11 der Kapillaren 1 auf einer gemeinsamen (vorderen) Linie A (siehe Fig. 1B), wodurch erreicht werden kann, dass die Kapillaren gleichzeitig gleich weit in die Kavitäten einer Mikrotiterplatte eingeführt werden können. Vorzugsweise liegt die Linie A parallel zu einer virtuellen Verbindungsline zwischen dem oberen vorderen Ende des Griffs 3 und dem unteren vorderen Ende des Griffs 3. Vorzugsweise liegen die Linie A auf dieser virtuellen Verbindungslinie.

Zudem kann der Griff 3, insbesondere der vordere Abschnitt bzw. das vordere Ende des Griffs 3 (rechts in Fig. 1B) als Anschlag dienen, wodurch beispielsweise sichergestellt wird, dass die vorderen Enden 11 der Kapillaren 1 eine erwünschte bzw. vorbestimmte Eintauchtiefe in die Kavitäten einer Mikrotiterplatte eingetaucht werden, d.h., der Griff 3 kann in seiner Funktion als Anschlag verhindern, dass die vorderen Enden 11 der Kapillaren 1 an den Boden der Kavitäten einer Mikrotiterplatte anschlagen und somit nicht beschädigt werden. Beispielsweise ist der Abstand zwischen den vorderen Enden 11 der Kapillaren und der Linie A 2mm. Zusätzlich oder alternativ kann auch die vordere (rechte) Befestigungsstrebe 22 des Trägers 20 als solch ein Anschlag dienen.

Der erfindungsgemäße Träger hat vorzugsweise zumindest einen Anschlag, der derart gestaltet ist, dass der Anschlag beim Befüllen der Kapillaren (Eintauchen der Kapillare in die mit Flüssigkeiten gefüllten Kavitäten) mit einer Außenseite einer Mikrotiterplatte in Berührung kommt (anschlägt), wodurch sichergestellt werden kann, dass nur die Kapillaren und kein Material des Träger in die Kavitäten eingeführt wird. Mit anderen Worten, erfindungsgemäß gelangt beim Eintauchen der Kapillaren in die Kavitäten der Mikrotiterplatten nur das Kapillar-Material in den Innenraum der Kavitäten, wodurch unbeabsichtigtes Verunreinigen der Flüssigkeit mittels Trägermaterial verhindert werden kann.

Der Träger weist vorzugsweise einen (hinteren) Anschlag 13 auf, an dem die hinteren Enden 12 der Kapillaren ausgerichtet werden können. Der Anschlag 13 ist vorzugsweise an einer dritten Strebe 23 vorgesehen, die, vorzugsweise in etwa parallel, zu den Streben 21, 22 vorgesehen ist, weiterhin vorzugsweise im Bereich der Rückseite des Trägers. Gleich lange Kapillaren können somit am Anschlag 13, der bevorzugt parallel zu den Befestigungsstreben verläuft, ausgerichtet werden. Damit kann vorteilhaft erreicht werden, dass die ersten vorderen Enden 11 der Kapillaren 1 auf einer gemeinsamen Geraden liegen (parallel zur gestrichelten Linie A in Figur 1B).

Zwischen dem Anschlag 13 bzw. der rückseitigen Strebe 23 und der (linken) hinteren Befestigungsstrebe 21 ist in dieser Ausführungsform ein Spalt 6 ausgebildet. Dieser Temperierspalt 6 ermöglicht eine individuelle oder eine gemeinsame Temperierung der Kapillaren mit Hilfe von bspw. temperierter Luft (erwärmt bzw. gekühlt), die durch den Temperierspalt 6 geleitet wird. Alternativ oder zusätzlich kann auch ein wärmeleitendes Material im Temperierspalt 6 vorhanden sein, das über Temperierelemente in der Messvorrichtung temperiert wird und wärmeleitend mit den Kapillaren verbunden ist. Vorzugsweise kann zusätzlich auch der Bereich zwischen dem Steg 22 und dem Kapillarende 11 für die Temperierung der Kapillaren verwendet werden. Zusätzlich und/oder alternativ kann beispielsweise auch der Bereich zwischen den Stegen 21 und 22 zur Temperierung der Kapillaren benutzt werden.

Um ein Befüllen der Kapillaren 1 am vorderen Ende 11 zu ermöglichen, besteht zwischen dem Anschlag 13 und dem hinteren Ende 12 der Kapillaren vorzugsweise kein fluiddichter Kontakt. In der dargestellten Ausführungsform ist ein Entlüftungsspalt 7 vorhanden, wodurch die in den Kapillaren vorhandene Luft beim Befüllen der Kapillaren entweichen kann. Dieser Spalt kann beispielsweise durch das Vorsehen einer Formschräge 14 und/oder Stufe 15 erreicht werden. Dies ist beispielhaft in den schematischen Details der Figuren 1C und 1D dargestellt. Beispielsweise kann der Entlüftungspalt auch so ausgeführt werden, dass er aus einem schmalen Luftspalt zwischen Anschlag 13 und hinteres Kapillarende 12 besteht, beispielsweise muss der Anschlag in diesem Fall nicht schräg sein.

Jede Kapillare 1 hat eine eigene Beschriftung 8 am Anschlag, hier an der den Anschlag ausbildenden Strebe 23.

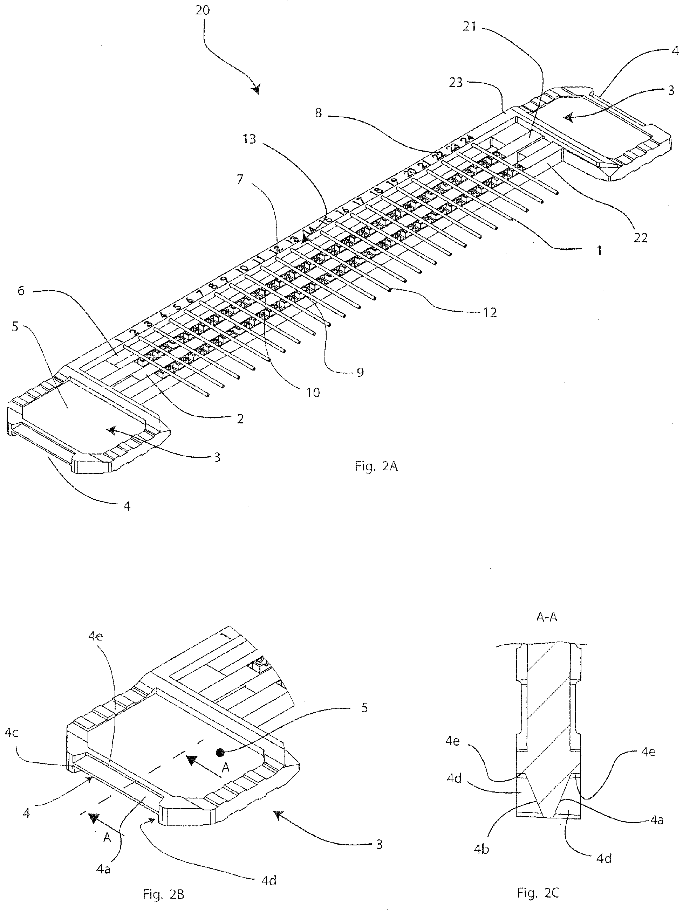

Figur 2 zeigt eine perspektivische Darstellung eines entsprechenden Trägers. Figur 2B zeigt das Detail eines Griffbereichs 3 mit einer Einrichtung bzw. Führung für ein automatisiertes Ergreifen bzw. Führen. Diese ist hier vorzugsweise keilförmig ausgebildet und weist zwei schräg nach außen, also vom Träger wegweisend, aufeinander zulaufende Flächen 4a, 4b auf. Des Weiteren weist die Einrichtung 4 vorzugsweise vordere und/oder hintere Anschläge 4c bzw. 4d auf. Diese verlaufen vorzugsweise schräg bzw. geneigt zu einander hin (keilförmig), insbesondere von außen in Richtung nach innen, bzw. in Richtung der Kapillaren. Auch kann ein innerer, also von außen in Richtung zum Träger bzw. den Kapillaren hin angeordneter, Anschlag 4e vorgesehen sein. Vorzugsweise sind jeweils zwei Anschläge 4c, 4d und/oder 4e vorgesehen, die vorzugsweise im Bezug auf die keilförmige Ausbildung der Flächen 4a, 4b im Wesentlichen symmetrisch angeordnet sind. Figur 2C zeigt eine Schnittansicht A-A eines Details der Führungseinrichtung 4 gemäß Fig. 2A.

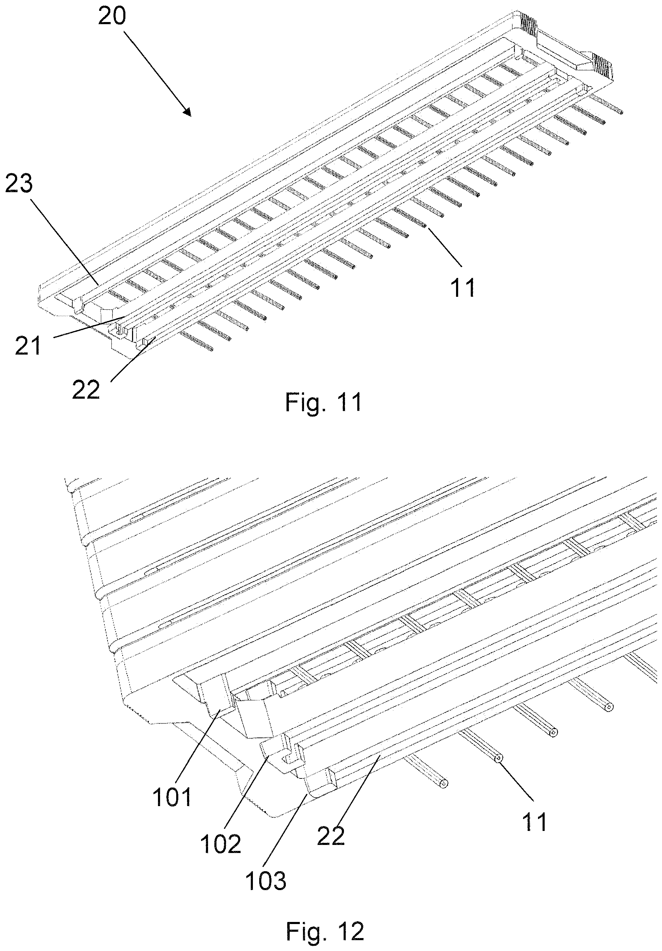

Vorzugsweise ist der Träger stapelbar ausgebildet. Insbesondere können die Träger aufeinander liegen bzw. gestapelt werden, ohne dass die Kapillaren beschädigt oder beschmutzt werden. Dies kann beispielsweise durch eine geeignete 'Verdickung' des Trägers, beispielsweise im Bereich der Griffbereiche 3 ermöglicht werden. Um ein sicheres Positionieren im Stapel zu erlauben, sind vorzugsweise Stapelelemente vorgesehen (nicht dargestellt; siehe jedoch Fig. 11-15), die neben der ausreichenden Beabstandung bspw. eine Positionierung erlauben.

Beispielsweise kann an der Unterseite eines Trägers mindestens ein Stapelelemnet, vorzugsweise in Form von einem oder mehreren Zähnen ausgebildet sein. Damit die aufeinandergestapelten Träger nicht gegeneinander verrutschen ist es zudem bevorzugt, dass auf der Oberseite eines Trägers entsprechende Aussparungen vorhanden sind, wobei beim Stapeln der Zahn bzw. die Zähne mit den entsprechenden Aussparungen des darunterliegenden Trägers in Eingriff kommen. Vorzugsweise sind die Zähne und Aussparungen ähnlich wie bei Kunststoffbausteinen, z.B. Lego® ausgebildet. Zudem kann es auch vorteilhaft sein, die Form und/oder Größe der Zähne unterschiedlich zu gestalten, um sicherzustellen, dass zwei Träger nur in einer Position übereinander gestapelt werden. Zudem können auch anstelle der Zähne unten am Träger Aussparungen vorhanden sein und oben am Träger entsprechend Zähne vorhanden sein. Weiterhin beispielhaft und vorzugsweise sind die Träger derart ausgebildet, dass die Abstände der sich entsprechenden Kapillaren1 zweier benachbarter Träger im gestapelten Zustand, wie eingangs beschrieben, etwa beispielsweise 4,5mm oder ein anderes Vielfaches von 2,25mm beträgt. So können die Kapillaren der gestapelten Träger vorzugsweise gleichzeitig eingetaucht und befüllt werden.

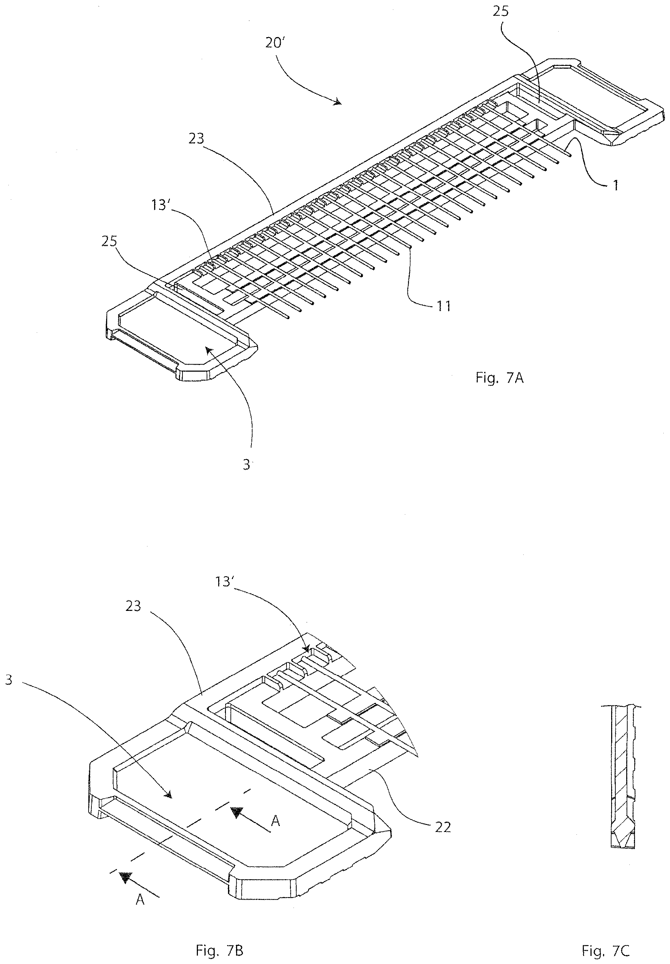

Figuren 7A und 7B zeigen, eine perspektivische Ansicht einer alternativen Ausführung des Trägers sowie ein entsprechendes Detail. Dieser weist einem Anschlag 13' in Form einer Vertiefung bzw. Tasche auf, die auch in den anderen Ausführungsformen Anwendung finden können. Die Übrigen Merkmale entsprechen dann denen in Bezug auf die anderen Ausführungsformen beschriebenen. Hierbei stoßen die Kapillaren 1 beispielsweise einen hinteren Anschlag an, wie oben beschrieben und bspw. in Bezug auf Fig. 1C und 1D erläutert oder es besteht beispielsweise ein schmaler Luftspalt zwischen Kapillar-Ende 12 und Anschlag 13'. Die Kapillaren 1 liegen zusätzlich in einer Tasche bzw. Vertiefung, wobei vorzugsweise jeweils eine Tasche für eine Kapillare vorgesehen ist. Diese Ausführungsform erlaubt vorzugsweise, neben den bereits oben erwähnten Vorteilen, dass nicht nur Luft aus der Kapillare austreten kann sondern dass eventuell zusätzlich austretende Flüssigkeit aufgefangen wird und bevorzugt zurück in die Kapillare gesogen werden kann. Vorzugsweise wird so verhindert, dass austretende Flüssigkeit von einer Kapillare in benachbarte Kapillaren läuft. Vorzugsweise kann so ein unerwünschtes 'Reinigen' der Kapillaren erschwert oder gar verhindert werden.

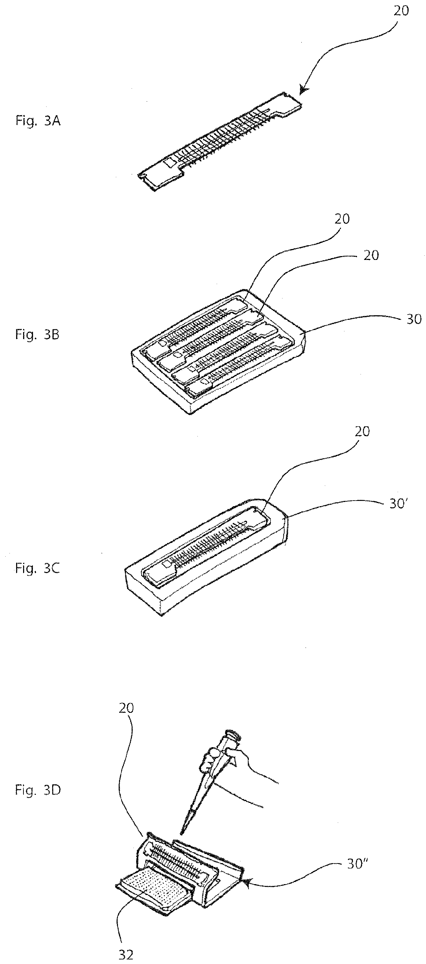

Fig. 3A zeigt eine weitere schematische perspektivische Ansicht des Trägers der Figuren 1 bzw. 2A. In Figur 3B ist beispielhaft dargestellt, wie mehrere, hier vier, erfindungsgemäße Träger 20 in einem erfindungsgemäßen Tray 30 angeordnet sind. Figur 3C zeigt ein weiteres erfindungsgemäßes Tray 30', das zur Aufnahme eines einzelnen Trägers 20 ausgebildet ist. Das Tray 30 bzw. 30' ist dabei ausgebildet, einen oder mehrere Träger 20 aufzunehmen. Vorzugsweise weist das Tray dazu eine oder mehrere Vertiefung(en) und/oder weitere mechanische Mittel, wie beispielsweise Vorsprünge oder Klemmeinrichtungen, auf. Diese sind auf die Geometrie des Trägers abgestimmt und erlauben vorzugsweise eine sichere, rutschfeste Positionierung des bzw. der Träger(s) auf dem Tray.

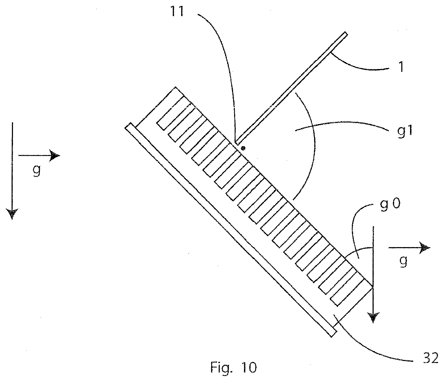

Fig. 3D zeigt eine erfindungsgemäße Befüllstation 30' mit einem erfindungsgemäßen Träger 20. Weiterhin ist die Befüllstation 30" vorzugsweise so ausgebildet bzw. ausgerichtet, um eine geneigte Positionierung des Trägers 20, beispielsweise um 45° zur Horizontalen, zu erreichen. Dadurch kann beispielsweise ein manuelles Befüllen erleichtert werden. Die bevorzugten Vorteile einer solchen Verkippung des Trägers 20 und/oder der Kapillaren in Bezug auf die Gravitationskraft wird weiter hinten Bezug auf Fig. 10 näher beschrieben. Des Weiteren ist die Befüllstation 30" vorzugsweise ausgebildet, eine Multitierplatte 32 aufzunehmen und in Bezug zu dem Träger anzuordnen. Hierdurch kann ein manuelles Befüllen der Kapillaren vereinfacht werden.

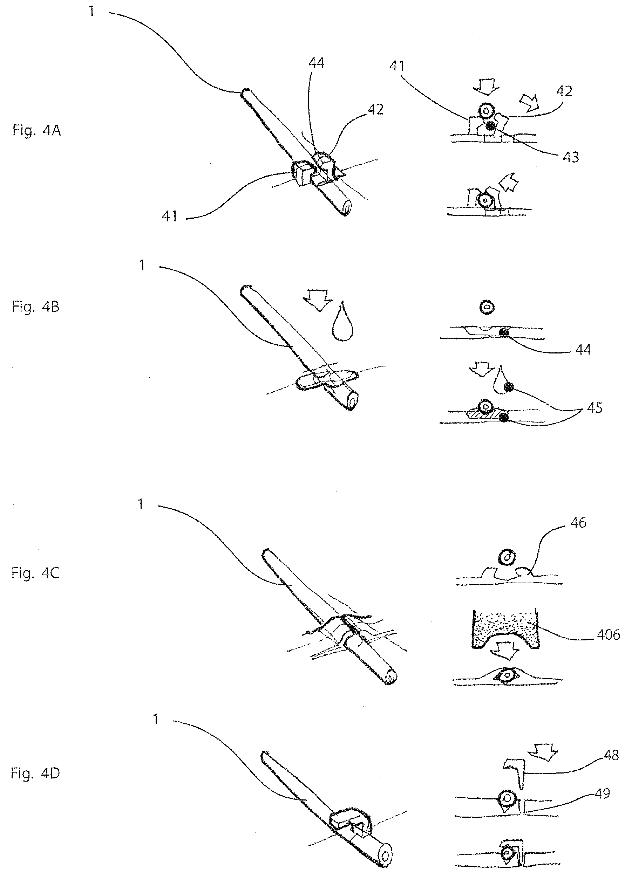

Die Figuren 4A bis 4D zeigen Beispiele für die mechanische Befestigung einzelner Kapillaren 1 an dem erfindungsgemäßen Träger, ohne jedoch darauf beschränkt zu sein. Beispielsweise zeigt die Fig. 4A links eine Kapillare 1, die mit Hilfe eines zweiteiligen Clips am Träger befestigt ist. In der dargestellten Ausführungsform weist der zweiteilige Clip zwei im Wesentlichen vom Träger abstehende L-förmige Elemente 41, 42 auf, die die Kapillare 1 am Träger befestigen. Vorzugsweise ist mindestens eines der Elemente 41, 42 so flexibel, dass die Kapillare in den Zwischenraum 43 zwischen den L-förmigen Elementen eingedrückt werden kann, d.h., mindestens eines der L-förmigen Elemente 41, 42 weicht flexibel seitlich nach außen aus, wenn die Kapillare in den Zwischenraum eingedrückt wird und federt vorzugsweise wieder zurück, wenn sich die Kapillare in dem Zwischenraum 43 befindet. Dies kann vorzugsweise durch das Vorsehen einer Abschrägung 44 an zumindest einem der Elemente 41, 42 unterstützt werden.

Figur 4B zeigt eine weitere erfindungsgemäße Ausführungsform zum Befestigen der Kapillare 1 auf dem Träger mittels Klebung. Vorzugsweise ist in dem Träger eine Aussparung 44 bzw. Nut 44 ausgebildet, die zur Aufnahme von Klebstoff 45 und/oder der Kapillare 1 dient. In der dargestellten Ausführungsform ist die Tiefe der Aussparung kleiner als der Durchmesser der Kapillare, sodass die festgeklebte Kapillare über den Träger (nach oben) hervorsteht.

Figur 4C zeigt eine weitere erfindungsgemäße Ausführungsform zum Befestigen der Kapillare 1 auf dem Träger mittels Prägung bzw. Heißprägung. Hierbei ist vorzugsweise mindestens ein Element 46 vorgesehen, dass nach auf- bzw. einlegen einer Kapillare 1 plastisch verformt wird, dass es die Kapillare fixiert. Dies kann vorzugsweise mittels eines entsprechenden Werkzeugs, beispielsweise eines Stempels 406 erfolgen, der auch als Heißprägestempel ausgebildet sein kann.

Schließlich zeigt die Figur 4D beispielhaft die Befestigung der Kapillare 1 am Träger mit Hilfe eines zusätzlichen Befestigungsteils 48. Befestigungsteil 48 ist vorzugsweise als vom Träger 10 separates Element ausgebildet und weist eine im Wesentlichen Winkel- oder L-förmige Form auf. Auch bspw. eine U-Form oder weitere Geometrien sind möglich. Der Träger bzw. Steg ist mit einem entsprechenden Aufnahmeelement versehen, hier einer Öffnung 49. Die Befestigung des Befestigungsteils 48 am Aufnahmeelement 49 kann durch Form- und/oder Kraftschluss erfolgen. Die Form des Befestigungsteils erlaubt es, eine ein- bzw. aufgelegte Kapillare zumindest teilweise zu umfassen und so am Träger zu fixieren.

Vorzugsweise sind die Befestigungsmittel, insbesondere wie oben beschrieben, derart ausgebildet, dass sie, ggf. gemeinsam mit dem Steg, die einzelne Kapillare entlang ihres Umfangs im Wesentlichen umschließen. So kann vorzugsweise eine Barriere gebildet werden, die verhindert, dass beim Befüllen der Kapillaren auf die Außenseite derselben gelangte Flüssigkeit in den Messbereich gelangt. Die Barriere kann mechanisch (nahezu völliges Umschließen) und/oder physikalisch sein (nur geringer Spalt bzw. Freiraum, so dass, bspw. aufgrund der Oberflächenspannung, innerhalb der Verwendungszeiten, bspw. von bis zu 5 Tagen keine Flüssigkeit hindurch dringt).

Figur 5 zeigt bevorzugte Verfahrensschritte zum Befüllen erfindungsgemäßer Träger sowie die Verwendung erfindungsgemäßer Träger und Trays. Hierbei wird in einem ersten Schritt gemäß Fig. 5 eine Multiwellplatte mit Probenflüssigkeit befüllt. Dies erfolgt vorzugsweise, wie auch im Stand der Technik bekannt, durch einen Befüllroboter.

Nachfolgend, gemäß Schritt 5-2, werden die im erfindungsgemäßen Träger angeordneten Kapillaren befüllt. Dies erfolgt beispielsweise durch gleichzeitiges Eintauchen aller Kapillaren zumindest eines Trägers in Wells bzw. Vertiefungen der Mikrotiterplatte gemäß Schritt 5-2a. Eine gestapelte Anordnung von mehreren Trägern, wie oben beschrieben, ermöglicht hierbei ein gleichzeitiges Befüllen der Kapillaren mehrerer Träger. Hierbei ist der Träger vorteilhafter bevorzugt so ausgebildet und/oder dimensioniert, dass Positionieren des Trägers und damit der Kapillaren relativ zur Mikrotiterplatte erleichtert wird, bspw. durch vorgegebene Anschläge, bspw. der Griffbereiche 3, an der Mikrotiterplatte. Vorzugsweise kann auch ein Adapter bzw. eine Befüllhilfe vorgesehen werden, in Figur 5-2a schematisch dargestellt, die ein Eintauchen und Befüllen der Kapillaren unterstützt und erleichtert. Der erfindungsgemäße Träger erlaubt somit ein halbautomatisches, gleichzeitiges Befüllen einer Vielzahl von Kapillaren, bspw. von 24 Kapillaren.

Vorzugsweise verhindert die Befüllhilfe bzw. Einfüllhilfe eine Beschädigung der Kapillaren. Bevorzugt ist die Einfüllhilfe so ausgeführt, dass die Kapillaren und die Mikrotiterplatte vorzugsweise in einem bestimmten Winkel relativ zur Richtung der Gravitation ausgerichtet werden, um das Befüllen der Kapillaren zu unterstützen. Veranschaulicht wird die Verkippung der Mikrotiterplatte 32 und der Kapillaren 1 in Bezug auf die Gravitationskraft beispielsweise in Fig. 10. Vorzugsweise wird die Miktrotiterplatte und/oder die Kapillare in Winkeln von etwa 0°, etwa 30°, etwa 45°, etwa 60° etwa 90° oder etwa 180° bezüglich der Gravitationskraft g ausgerichtet. Vorzugsweise wird diese Ausrichtung/Verkippung durch die Befüllhilfe so ausgeführt, dass die Längsachse der Kapillaren im Wesentlichen senkrecht (siehe Winkel g1) auf der Bodenebene/Grundfläche der Mikrotiterplatte steht. Beispielsweise wird die Mikrotiterplatte durch die Befüllhilfe so ausgerichtet , dass ihre Grundfläche/Bodenfläche in einem Winkel von 30° zur Gravitationsrichtung (siehe Winkel g0) ausgerichtet ist, vorzugsweise werden die Kapillaren/die Kapillarträger in diesem Fall durch die Befüllhilfe so ausgerichtet, dass sie einen Winkel von 60° zur Gravitationsrichtung bilden. Vorzugsweise werden Mikrotiterplatte 32 und Kapillaren 1 dabei durch die Befüllhilfe so zueinander ausgerichtet, dass ein Abbrechen der Kapillaren beim Eintauchen in die Mikrotitetplatte verhindert wird. Vorzugsweise wird die Mikrotiterplatte so gegenüber den Kapillaren ausgerichtet dass die Längsachse der Kapillaren parallel zu den Wänden der Kavitäten in der Mikrotitetplatte ausgerichtet sind. Vorzugsweise erleichtert diese Schrägstellung gegenüber der Richtung der Gravtitation die Befüllung der Kapillaren, da die Kapillarkräfte bei einer Schrägstellung nicht gegen die vollen Gravitationskräfte arbeiten müssen ("Schiefe Ebene"-Prinzip). Beispielsweise kann die Schrägstellung der Mikrotiterplatten und der Kapillaren von der einzuziehenden Flüssigkeit abhängen, beispielsweise kann die Mikrotiterplatte bei Flüssigkeiten mit sehr viel Detergenzien in einem größeren Winkel relativ zur Richtung der Gravitation ausgerichtet werden um ein Auslaufen der Flüssigkeiten aus den Kavitäten zu vermeiden. Beispielsweise kann die Bodenebene/Grundfläche der Mikrotiterplatte in einem Winkel von 0° relativ zur Gravitation oder beispielsweise auch in einem Winkel von 180° zur Gravitation (Mikrotiterplatte steht auf dem Kopf) ausgerichtet sein um das Befüllen der Kapillaren mit sehr viskosen Flüssigkeiten oder Flüssigkeiten bei denen geringe Kapillarkräfte auftreten zu gewährleisten

Alternativ können die Kapillaren durch Pipettieren befüllt werden, wie beispielsweise im Zusammenhang mit Figur 3D bzw. 5-2b beschreiben. Der erfindungsgemäße Träger erweist sich hier als besonders vorteilhaft, da er ein sicheres Befüllen, insbesondere durch geeignete Ausrichtung und Anordnung der Kapillaren ermöglicht. Hierbei wird insbesondere das gleichzeitige Befüllen einer Vielzahl von Kapillaren vorteilhaft ermöglicht.

Alternative, wie nachfolgend weiter beschrieben, erlaubt der erfindungsgemäße Träger ein automatisches Befüllen der Kapillaren.

In einem bevorzugten folgenden Schritt 5-3 wird der Träger bzw. werden die Träger auf einem erfindungsgemäßen Tray abgelegt bzw. darauf positioniert. Dann wird das Tray mit dem/den Träger(n) in ein Analysegerät eingelegt, Schritt 5-4. Je nach Ausbildung des Analysegerätes können die Träger auch direkt, also ohne Tray, eingelegt werden. Die Verwendung eines Trays erweist sich jedoch als vorteilhaft, insbesondere im Hinblick auf Handling und Prozesssicherheit.

Nach der Analyse wird das Tray dem Analysegerät entnommen, evt1. zwischengelagert, bspw. für spätere Vergleichsmessungen, und anschließend entleert, Schritt 5-5. Das Tray kann dann wiederverwendet werden. Die Träger werden vorzugsweise entsorgt.

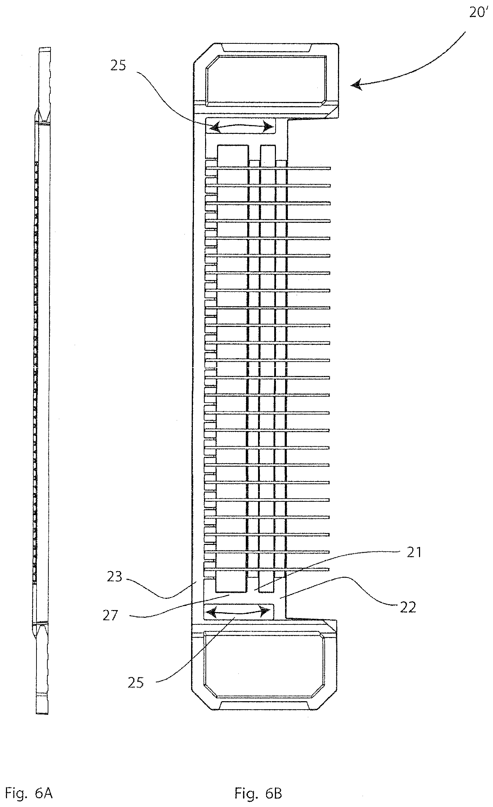

Figur 6B zeigt schematisch eine beispielhafte Ausführungsform eines erfindungsgemäßen Trägers 20' in einer Draufsicht, Figur 6A in der Seitenansicht. Der Träger 20' entspricht im Wesentlichen dem im Zusammenhang mit Figuren 1 und 2 beschriebenen. Es wird daher nachfolgen nur auf die Unterschiede eingegangen, wobei unterschiedliche Merkmale zwischen den Ausführungsformen vorzugsweise auch in der jeweils anderen Ausführungsform vorgesehen werden können. Vorzugsweise kann beispielsweise der taschenförmige Anschlag 13' gemäß der Ausführungsform nach Figuren 6 und 7, wie bereits oben beschrieben, auch in der Ausführungsform gemäß Figuren 1 und 2 vorgesehen werden. Umgekehrt gilt dies für den Anschlag gemäß der Ausführungsform nach Figuren 1 und 2, der auch in der Ausführungsform gemäß Figuren 6 und 7 vorgesehen werden kann. Weiterhin können die nachfolgend beschriebenen Merkmale, einzeln oder in Kombination, auch in den anderen Ausführungsformen vorgesehen werden oder aber durch die in anderen Ausführungsformen vorgesehenen Merkmal ersetzt bzw. ergänzt werden.

Der Träger gemäß Fig. 6 weist vorzugsweise mindestens einen Durchbruch bzw. eine Öffnung oder Vertiefung 25 auf. Wie dargestellt vorzugsweise zwei. Die Durchbrüche 25 sind vorzugsweise länglich ausgebildet und erstrecken sich in etwa parallel zu den Kapillaren 1. Vorzugsweise sind die Durchbrüche 25 zwischen Griffbereich 3 und den Kapillaren 1 angeordnet. Sie können begrenzt werden durch den Griffbereich 3, die Stege 21, 22, und/oder 23 sowie ggf. einen weiteren Begrenzungsteg 27, der sich im Wesentlichen quer zu den Stegen 21,22, und/oder 23 erstreckt und vorzugsweise zwischen Durchbruch 25 und den Kapillaren 1 angeordnet ist.

Der Durchbruch erlaubt vorzugsweise die exakte Positionierung und Ausrichtung des Trägers, beispielsweise beim halbautomatischen oder automatischen Befüllen und/oder beim Anordnen auf einem erfindungsgemäßen Tray. In diese Durchbrüche greifen exakt abgestimmte Dome, wodurch eine exakte Positionierung bzw. Ausrichtung des Trägers erreicht werden kann. Solche Dome bzw. Vorsprünge können an einer Befüllhilfe, einem Tray und/oder einem _Greifer eines Roboter/einer Handlingvorrichtung vorgesehen sein.

Eine weiter bevorzugtes Merkmal ist das Ausbilden eines Tiefenanschlags durch die Durchbrüche 25. Die kann sich beim Eintauchen in Mikrowellplatten als vorteilhaft erweisen. Insbesondere erlauben die Durchbrüche, dass ein Führungselement, beispielsweise ein zylindrischer Bolzen (nicht dargestellt) in diese Eingreift. So kann das Array nur um den Bereich bzw. entlang des freien Durchbruchs verschoben werden (vgl. Pfeil in Fig. 6B). Ein solches Führungselement kann an einer Befüllhilfe und/oder einem _Greifer eines Roboter/einer Handlingvorrichtung vorgesehen sein. Die Durchbrüche erlauben somit vorteilhaft eine Führung und/oder Positionierung in Längsrichtung der auf dem Träger angeordneten Kapillaren und/oder in Querrichtung der Kapillaren in deren Anordnungsebene. Vorzugsweise ist der Durchbruch nicht als durchgehender Durchbruch sondern als Vertiefung ausgebildet. Dann kann bspw. auch eine Führung und/oder Positionierung senkrecht zur Anordnungsebene der Kapillaren erlauben. In diesem Fall können mindestens 1, 2, oder 4 Durchbrüche 25 vorgesehen sein. Beim Vorsehen von mehr als zwei als Vertiefung ausgebildeten Durchbrüchen, können jeweils zwei Durchbrüche auf gegenüberliegenden Seiten eines Griffbereichs 3 angeordnet sein. So kann eine vorteilhafte, mehrdimensionale Führung und/oder Positionierung erreicht werden.

Ein weiterer Vorteil der erfindungsgemäßen Träger ist die mögliche Automatisierung. Insbesondere haben die erfindungsgemäßen Träger vorzugsweise Vorrichtungen/Greifflächen 4 die es erlauben, den Träger automatisch, beispielsweise mit Pipettierrobotern oder anderen automatischen Vorrichtungen/Greifern, zu handhaben. Dadurch kann der gesamte Befüllungsablauf vollständig automatisiert werden. Eine bevorzugte Ausbildung der Führungs- bzw. Greifeinrichtungen 4 wurde bereist vorstehend beschrieben. Derartige Einrichtungen 4 erleichtern insbesondere das Greifen durch bspw. eine Handlingvorrichtung. Vorzugsweise sind sie an gegenüberliegenden Außenseiten des Trägers, vorzugsweise an Längsseiten (sich quer zur Längsache erstreckende Seiten) der nach außen gewandten Seite der Griffbereiche 3 angeordnet. Dem Fachmann wird jedoch geläufig sein, dass auch andere Position möglich sind.

Die Greifeinrichtungen, beispielsweise wie vorstehend beschrieben, sind so ausgeformt bzw. erlauben insbesondere, dass sich das Array in einem Greifer sicher und zentriert positionieren lässt. Beispielsweise können die keilförmigen Flächen 4a, 4b, 4c, 4d die automatische Ausrichtung bzw. automatische Zentrierung in horizontaler wie vertikaler Achse unterstützen. Auch wenn das Array nicht ganz fest gepackt ist, kann es nicht leicht aus den Greifern fallen (Toleranzzugabe).

Die Greifeinrichtungen erlauben weiterhin ein Greifen des Trägers von einem Stapel von Trägern, aus einer Verpackung, von einer Fläche oder aus einer Vorrichtung heraus. Hierbei ist lediglich erforderlich, dass an den Schmalseiten genügend Platz ist, dass die Greifer an die Greifeinrichtungen angreifen können. Die Greifeinrichtungen sind dabei vorzugsweise so ausgelegt, dass sie mit einem kombinierten Greifer, der verschiedene Handlingschritte durchführen kann, gefasst werden können.

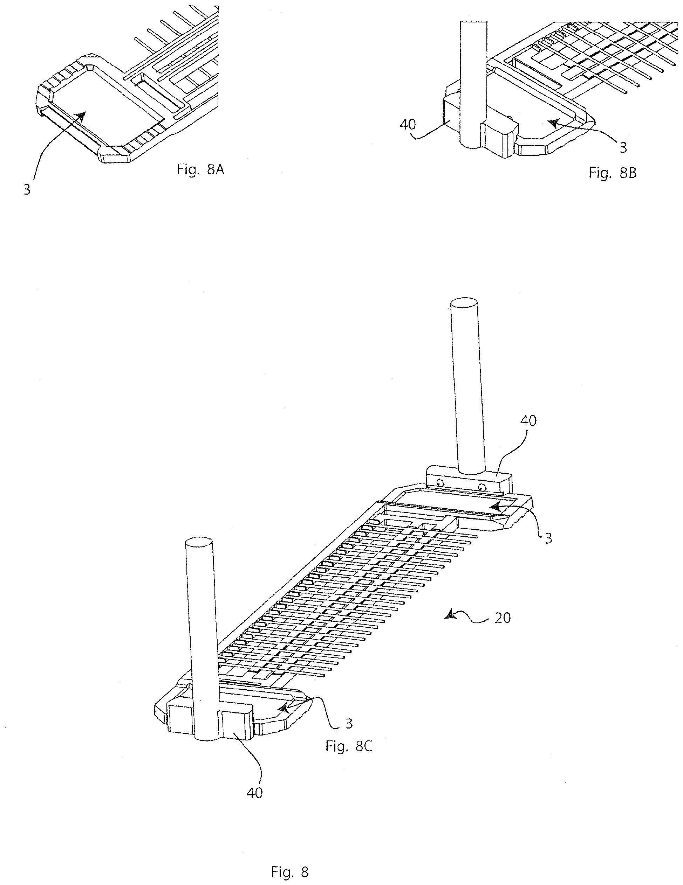

Figur 8 zeigt beispielhaft einen entsprechenden Greifer eines Roboters bzw. Handlingsystems, der mit einer der Greifeinrichtung korrespondierenden Geometrie ausgebildet ist und mit dieser in Eingriff steht. Dabei weist der Greifer vorzugsweise den Flächen 4a, 4b, 4c, 4d und 4e entsprechende Flächen auf, die mit diesen in Eingriff gebracht werden können, insbesondere um so ein sicheres Greifen und eine sicheres Positionieren und Handling zu ermöglichen. Figur 8 zweigt dabei ein schematisch perspektivisches Beispiel für automatisiertes Handling, wobei Figur 8A ein Ende eines Trägers mit einem Griffbereich 3 zeigt und Figur 8B dieses Ende mit einem Greifer eines Handlingsystems, der mit der Greifeinrichtung 4 des Griffbereichs 3 in Eingriff steht. Figur 8C zeigt eine Komplettansicht des Trägers mit sich im Eingriff befindenden Greifern.

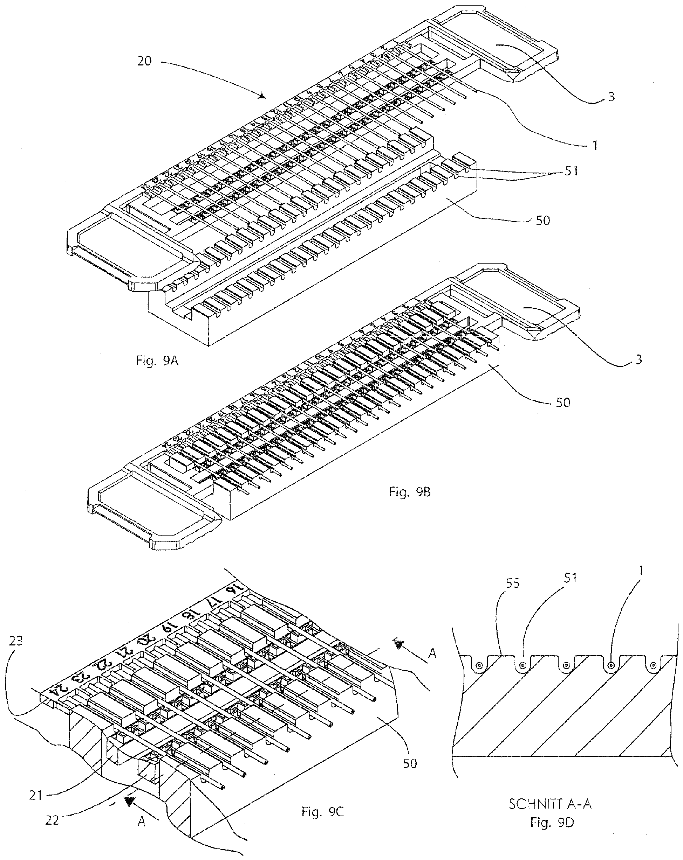

Figur 9A zeigt beispielhaft eine Temperiervorrichtung zum Temperieren der Kapillaren 1 eines Trägers 20. Die perspektivische Ansicht zeigt den Träger noch vor dem Temperieren getrennt von der Temperiervorrichtung. Die Temperiervorrichtung weist einen Temperierkörper 50 auf mit voneinander beabstandeten Temperrierrippen 55. Zwischen den Temperierrippen sind Aussparungen 51 ausgebildet, die zur Aufnahme der Kapillaren 1 dienen (siehe Fig. 9B, 9C und 9D). Figur 9B zeigt einen Träger 20 der so auf den Temperierkörper liegt, dass zumindest eine, vorzugsweise mehrere der Temperierrippen 55 zwischen den Kapillaren liegen. Die Kapillaren sind in den entsprechenden Aussparungen 51 lokalisiert. Vorzugsweise hat die Temperiervorrichtung mindestens eine Reihe mit Temperierrippen, vorzugsweise zwei Reihen Temperierrippen, wie in den Figuren 9A bis 9C dargestellt.

Vorzugsweise ist die erste Reihe Temperierrippen 55 so ausgebildet, dass sie zwischen den Kapillaren 1 vor dem vorderen Steg 22 (vordere Befestigungsstrebe) des Trägers 20 angeordnet sind, wenn der Träger zum temperieren in die Temperiervorrichtung gelegt wird.

Zudem ist es bevorzugt, wenn eine zweite Reihe Temperierrippen 55 so ausgebildet ist, dass sie zwischen den Kapillaren 1 und hinter dem mittleren Steg 21 (mittlere Befestigungsstrebe), vorzugsweise zwischen dem Steg 21 und der dritten Strebe 23 liegt, wenn der Träger zum temperieren in die Temperiervorrichtung gelegt wird.

Mit anderen Worten, die Temperrierrippen liegen während der Temperierung vorzugsweise im Temperierbereich 6 des Trägers, wobei ein Träger vorzugsweise zwei Temperierbereiche aufweist, die bevorzugt eine individuelle oder gemeinsam Temperierung einer oder mehrerer Kapillaren ermöglichen. Ein erster Temperierbereich 6 des Trägers ist vorzugsweise zwischen einem der beiden Stege 21, 22 und dem hinteren Steg 23 und/oder zwischen einem der beiden Stege 21, 22 und dem freien Ende (11) ausgebildet.

Vorzugsweise werden die Kapillaren durch ein temperierte Luftpolster zwischen den Temperierung-Rippen und dem Deckel (nicht eingezeichnet) geheizt/gekühlt/temperiert. Vorzugsweise ist der Deckel so ausgeführt dass er den Träger und die Kapillaren vollständig bedeckt und vorzugsweise eine Öffnung im Bereich des Messbereichs 2 aufweist.

Beispielhaft kann ein Ablauf, in den eine Handlingsvorrichtung integriert ist, wie folgt dargestellt werden, wobei die einzelnen Schritte optional sind: 0. Öffnen der Verpackung durch den Greifer. 1. Entnahme eines Arrays aus der Verpackung/Magazin 2. Transport des Arrays zu einer Befüllposition 3. Befüllung des Arrays 4. Transport des befüllten Arrays zu einem Tray/einer Messvorrichtung 5. Ablage (und Positionierung) auf dem Tray/in der Messvorrichtung 6. Nach dem Messvorgang: Entnahme des Arrays/Trays aus der Messvorrichtung und Transport zu einem Lagerbehälter (z.B. Müllbox oder Zwischenlager).

Fig. 11 zeigt eine perspektivische Ansicht einer weiteren bevorzugten Ausführungsform von unten. Insbesondere zeigt der Vergleich des Kapillar-Trägers 20 aus der Fig. 6B mit der alternativen Ausführungsform der Fig. 11 grundsätzlich einen sehr ähnlichen Aufbau. Allerdings wurden in der Ausführungsform der Fig. 11 die Griffbereiche 3 auf beiden Seiten verkleinert bzw. weggelassen. Diese alternative Ausführungsform ist somit kompakter und vorzugsweise auf automatisches Handling und/oder Platzersparnis ausgelegt.

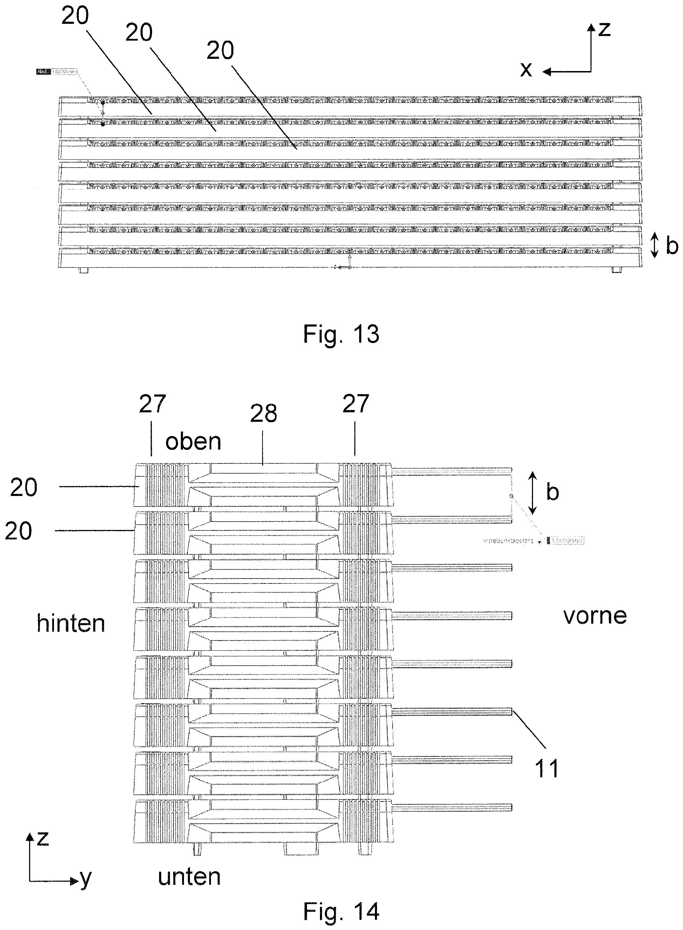

Fig. 12 zeigt eine perspektivische Detailansicht der Kapillar-Träger 20 aus Fig. 11. Insbesondere zeigt diese Detailansicht Zähne 101, 102 und 103 mit deren Hilfe die Kapillar-Träger 20 einfach zu stapeln sind. Das hat sowohl für die Lagerung, Verpackung und das automatische und manuelle Handling Vorteile. Vorzugsweise haben die Kapillar-Träger 20 nach unten hervorstehende "Zähne" 101, 102 und/oder 103, die in entsprechende Aussparungen auf der Oberseite des darunterliegenden Kapillar-Trägers 20 greifen bzw. damit in Eingriff kommen. Vorzugsweise sind die Zähne und Aussparungen ähnlich wie bei Kinder Kunststoffbausteinen (z.B. Lego®) ausgebildet, wodurch mehrere Kapillar-Träger 20 einfach übereinander gestapelt werden können. Dies hat den bevorzugten Vorteil, dass so zusammengesteckte Kapillar-Träger gegenseitig nicht verrutschen, d.h. die Kapillar-Träger rutschen in der Ebene nicht auseinander. Vorzugsweise sind die Kapillar-Träger so bemessen, dass die Kapillare zweier benachbarter Träger in einem Stapel 4,5 mm voneinander beabstandet sind. Mit anderen Worten, die Kapillar-Träger sind so hoch, dass die Kapillare benachbarter Kapillar-Träger der Höhe (siehe Figuren 13 und 14) einen Abstand "**b**" von etwa 4,5mm haben, einsprechend dem Rastermaß von 384er Multiwellplatten. Vorzugsweise ist der Abstand "b" der Mittelpunktsabstand zweier Kapillare die auf benachbarten gestapelten Trägern liegen im Wesentlichen 4,5 mm. Entsprechend können so z.B. 2 bis 16 Kapillar-Träger 20 gestapelt werden und gleichzeitig in eine Multiwellplatte gesteckt werden. Das funktioniert vorzugsweise auch für 96 (9mm Raster -> max. 4 Kapillaren pro Well) und 384er Multiwellplatten (4,5mm Raster). Für 1536er Multiwellplatten (Rastermaß 2,25 mm) wird bei einem Abstand b=4,5mm "nur" jede zweite Reihe erwischt; dies kann aber für bestimmte Anwendung vorteilhaft sein. Die gesamte Multiwellplatte kann aber dennoch ausgenützt werden, indem 2mal mit einem 16er Stapel eingetaucht wird.

Fig. 13 zeigt eine Vorderansicht von acht gestapelten Trägern 20 mit Blick auf die freien Öffnungen der Kapillaren 11. Der oben diskutierte Abstand b ist beispielhaft für zwei benachbarte Träger eingezeichnet.

Zudem ist aus dieser Ansicht der gestapelten Kapillar-Träger 20 die Anordnung im 4,5 x 4,5 mm Raster zu erkennen. Mit anderen Worten, die Kapillaren sind sowohl in der Höhe (z-Richtung) als auch in "x-Richtung" im Raster 4,5mm angeordnet, wobei die Kapillaren sich entlang der y-Richtung erstrecken (siehe Fig. 14).

Fig. 14 zeigt den Stapel der Fig. 13 in einer seitlichen Ansicht. Wiederum ist der Kapillarabstand übereinander gestapelter Kapillarchips mit einem Abstand b = 4,5mm beispielhaft dargestellt. Zudem ist in dieser Ausführungsform auch eine geriffelte Fläche27 links und rechts von einer "Greifschräge" 28 dargestellt. Diese beiden Elemente helfen Robotern den Kapillar-Träger 20 zu greifen.

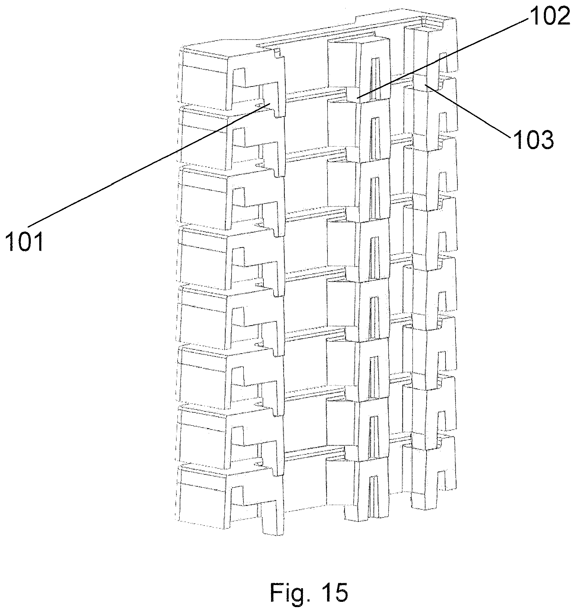

Fig. 15 ist ein Schnitt durch die gestapelten Kapillar-Träger 20. In dieser Darstellung ist deutlich zu erkennen, wie die Zähne 101, 102 und 103 des oben liegenden Trägers in entsprechende Aussparungen im unten liegenden Träger 20 greifen.

Die Erfindung umfasst ebenfalls die genauen oder exakten Ausdrücke, Merkmale, numerischen Werte oder Bereiche usw., wenn vorstehend oder nachfolgend diese Ausdrücke, Merkmale, numerischen Werte oder Bereiche im Zusammenhang mit Ausdrücken wie z.B. "etwa, ca., um, im Wesentlichen, im Allgemeinen, zumindest, mindestens" usw. genannt wurden (also "etwa 3" soll ebenfalls "3" oder "im Wesentlichen radial" soll auch "radial" umfassen). Der Ausdruck "bzw." bedeutet überdies "und/oder".

## Patentansprüche

1. Träger (20) mit mehreren Kapillaren (1), insbesondere für Thermophoresemessungen, wobei die Kapillaren (1) in einer Ebene angeordnet sind und mechanisch am Träger (20) befestigt sind, und
wobei zumindest ein erstes freies Ende (11) jeder Kapillare (1) über den Träger (20) derart hervorsteht, dass die freien Enden der Kapillaren (1) gleichzeitig in Kavitäten einer Mikrotiterplatte eingeführt werden können,
wobei am Träger (20) Stapelelemente in Form mindestens eines hervorstehenden Zahns (101, 102, 103) und mindestens einer ausgebildeten Aussparung vorgesehen sind, wobei die Aussparung bei aufeinander gestapelten Trägern mit dem Zahn eines benachbarten Trägers aus dem Stapel in Eingriff kommt.

2. Träger nach Anspruch 1, wobei der Abstand benachbarter Kapillaren etwa 2,25mm oder ein ganzzahliges Vielfaches davon beträgt, vorzugsweise 4,5mm

3. Träger nach Anspruch 1, wobei
i) das erste freie Ende (11) 3mm bis 20mm, vorzugsweise 10mm bis 12mm, vorzugsweise 11mm über den Träger hervorsteht und/oder wobei das erste freie Ende (11) über den Träger hervorsteht, dass es 3mm bis 20mm, vorzugsweise 10mm bis 12mm, vorzugsweise 11mm in eine Kavität einer Mikrotiterplatte eingeführt werden kann, und vorzugsweise nur die Kapillaren in die Kavität eingeführt werden, und/oder
ii) die Kapillaren eine Länge von 5mm bis 50mm, vorzugsweise von 10mm bis 40mm, 30-35mm und bevorzugt von etwa 32mm haben.

4. Träger nach einem der vorhergehenden Ansprüche, wobei die Kapillaren (1) auf dem Träger (20) derart befestigt sind, dass ein zweites Ende (12) der Kapillaren (1) derart offen ist, das Luft entweichen kann, vorzugsweise wenn das erste freie Ende (11) mit Flüssigkeit befüllt wird bzw. zum Befüllen in eine Flüssigkeit eingetaucht wird.

5. Träger nach einem der vorhergehenden Ansprüche der an mindestens einer Seite, vorzugsweise beiden Seiten, eine/mehrere Grifffläche(n) (3, 27) und/oder Positionierhilfe(n) (4, 25, 28) für ein automatisches Handling aufweist,
wobei die Positionierhilfe vorzugsweise für ein automatisiertes Ergreifen bzw. Führen eingerichtet ist und vorzugsweise mindestens einen keilförmig ausgebildeten Abschnitt aufweist, vorzugsweise zwei keilförmig ausgebildete Abschnitte.

6. Träger nach einem der vorhergehenden Ansprüche, wobei der Träger mindestens zwei Stege (21, 22) aufweist, die bevorzugt parallel zueinander verlaufen, die sich bevorzugt quer zur Längsachse der Kapillaren erstrecken, und die bevorzugt voneinander beabstandet sind,
wobei die Kapillaren (1) vorzugsweise jeweils an mindestens zwei Punkten bzw. Bereichen am Träger befestigt sind, wobei vorzugsweise ein Punkt auf dem ersten Steg (21) und ein Punkt auf dem zweiten Steg (22) liegt.

7. Träger nach einem der vorhergehenden Ansprüche, wobei der Träger einen Anschlag (13) aufweist, der an einem dritten Steg (23) vorgesehen ist, an dem die hinteren Enden der Kapillaren (1) ausgerichtet werden können.

8. Träger nach einem der vorhergehenden Ansprüche, wobei der Träger eine Messaussparung (2) aufweist, sodass die Kapillare (1) mit Licht von einer Lichtquelle, die senkrecht zur gemeinsamen Ebene Licht abstrahlt, durchleuchtet bzw. beleuchtet werden können, vorzugsweise in einem mittleren Bereich zwischen dem ersten und dem zweiten Ende (11, 12) der Kapillare (1),
wobei die Messaussparung (2) vorzugsweise zwischen den beiden Stegen (21, 22) ausgebildet ist, und wobei die Messaussparung (2) vorzugsweise zwischen 2mm-6mm, vorzugsweise zwischen 3-5mm, und weiter bevorzugt ca. 4mm breit ist.

9. Träger nach einem der vorhergehenden Ansprüche, wobei der Träger einen Temperierbereich (6), vorzugsweise zwei Temperierbereiche aufweist, die bevorzugt eine individuelle oder gemeinsam Temperierung einer oder mehrerer Kapillaren ermöglichen,
wobei der Temperierbereich (6) vorzugsweise zwischen einem der beiden Stege (21, 22) und dem hinteren Steg (23) und/oder zwischen einem der beiden Stege (21, 22) und dem freien Ende (11) ausgebildet ist.

10. Träger nach einem der vorhergehenden Ansprüche, wobei das erste freie Ende (11) jeder Kapillare (1) über den Träger (20) hervorsteht, indem es über einen der Stege (21, 22) hervorsteht, insbesondere über den äußeren, dem freien Ende (11) zugewandten Steg (22).

11. Träger nach einem der vorhergehenden Ansprüche, wobei der Träger (20) so konfiguriert ist, dass die freien Enden (11) der Kapillaren gleichzeitig in Kavitäten einer Standard 96er, einer 384 oder einer 1536er Mikrotiterplatte eingeführt werden können und der Träger (20) vorzugsweise mit 4, 6, 8, 12, 16, 24, 48 oder 96 Kapillaren (1) bestückt ist.

12. Träger nach einem der vorhergehenden Ansprüche, wobei der Träger (20) eindeutig gekennzeichnet werden kann, vorzugsweise mit mindestens einem der Folgenden Verfahren: Beschriften, Farbgestaltung, Barcode, 2D Barcode, DataMatrix Code, RFID.

13. Träger nach einem der Ansprüche 1-2, wobei der Abstand (b) zwischen zwei Kapillaren (1) zweier aufeinander gestapelter Träger (20) 4,5 mm beträgt.

14. Kit mit einem Träger nach einem der vorherstehenden Ansprüche und einem Tray zur Aufnahme mindestens eines Trägers, vorzugsweise zur Aufnahme mehrerer Träger.

15. Verfahren zum Befüllen mehrerer Kapillaren in einem Träger nach einem der vorherstehenden Ansprüche 1 - 13, wobei
i) die mehreren Kapillaren gleichzeitig mit Hilfe von Kapillarkräften befüllt werden, indem die ersten freien Enden der Kapillaren gleichzeitig in Kavitäten einer Mikrotiterplatte eingeführt werden, oder
ii) mehrere der mehreren Kapillaren gleichzeitig mit Hilfe einer Mehrkanal-Pipette über die ersten freien Enden befüllt werden.

16. Verfahren zum Befüllen mehrerer Kapillaren nach Anspruch 15, wobei der Träger und/oder die Kapillaren während des Befüllens schräg zwischen einer horizontalen und vertikalen Position oder vertikal bezüglich der Gravitation ausgerichtet ist/sind.

17. Verfahren nach einem der Ansprüche 15 bis 16, wobei das Verfahren zumindest einen die folgenden Schritte aufweist, der automatisiert durchgeführt wird:
1. Entnahme eines Trägers aus einer Verpackung/Magazin
2. Transport des Trägers zu einer Befüllposition
3. Befüllung des Trägers
4. Transport des befüllten Trägers zu einem Tray/einer Messvorrichtung
5. Ablage auf dem Tray/in der Messvorrichtung
6. Durchführen eines Messvorgangs
7. Entnahme des Arrays/Trays aus der Messvorrichtung und Transport zu einem Lagerbehälter (z.B. Müllbox oder Zwischenlager).

18. Befüllstation mit einem Träger (20) nach einem der Ansprüche 1 bis 13, zum Befüllen der Kapillaren des Trägers (20), wobei die Befüllstation eine Aufnahme für den Träger (20) aufweist und der Träger vorzugsweise in einem Winkel zwischen 0° bis 180° gegenüber der Gravitationskraft verkippt ist.

19. Temperiervorrichtung mit einem Träger (20) nach einem der Ansprüche 1 bis 13, zum Temperieren der Kapillaren des Trägers, wobei die Temperiervorrichtung einen Temperierkörper (50) mit voneinander beabstandeten Temperierrippen (55) aufweist, und der Träger (20) so auf den Temperierkörper gelegt werden kann, dass zumindest eine, vorzugsweise mehrere der Temperierrippen (55) zwischen den Kapillaren liegen.

## Claims

1. An array (20) with a plurality of capillaries (1), in particular for thermophoresis measurements, wherein the capillaries (1) are arranged in the same plane and are mechanically attached to the array (20), and
wherein at least one first free end (11) of each capillary (1) projects from the array (20) in such a way that the free ends of the capillaries (1) may be inserted simultaneously into wells of a microwell plate,
wherein stacking elements in the shape of at least one projecting tooth (101, 102, 103) and at least one configured recess are provided at the array (20), wherein, when the arrays are stacked, the recess engages with the tooth of an adjacent array from the stack.

2. The array according to claim 1, wherein the distance between adjacent capillaries amounts to approximately 2.25mm or an integer multiple thereof, preferably 4.5mm.

3. The array according to claim 1, wherein
i) the first free end (11) projects 3mm to 20mm, preferably 10mm to 12mm, preferably 11mm from the array and/or wherein the first free end (11) projects from the array in such a way that it may be inserted 3mm to 20 mm, preferably 10mm to 12mm, preferably 11mm into a well of a microwell plate, and preferably only the capillaries are inserted into the well, and/or
ii) the capillaries have a length of 5mm to 50mm, preferably of 10mm to 40mm, 30-35mm and preferred of about 32mm.

4. The array according to any one of the preceding claims, wherein the capillaries (1) are attached to the array (20) in such a way that a second end (12) of the capillaries (1) is open in such a way that air may leak, preferably when the first free end (11) is filled with a liquid or is dipped into a liquid in order to be filled.

5. The array according to any one of the preceding claims, which comprises on at least one side, preferably on both sides, one/a plurality of handle surface(s) (3, 27) and/or positioning guide(s) (4, 25, 28) for an automatic handling,
wherein the positioning guide is preferably designed for an automated grabbing or guiding and comprises preferably at least one tapered section, preferably two tapered sections.

6. The array according to any one of the preceding claims, wherein the array comprises at least two bridges (21, 22) which are preferably parallel to each other and which extend preferably transverse to the longitudinal axis of the capillaries, and are preferably spaced apart from one another,
wherein the capillaries (1) are attached to the array preferably each at at least two points or sections, wherein preferably one point is on the first bridge (21) and one point is on the second bridge (22).

7. The array according to any one of the preceding claims, wherein the array comprises an abutment (13) provided on a third bridge (23) at which the rear ends of the capillaries (1) can be aligned.

8. The array according to any one of the preceding claims, wherein the array comprises a measurement recess (2) so that the capillary (1) may be screened or illuminated by means of light from a light source which radiates light perpendicular to the common plane, preferably in a central region between the first and the second end (11, 12) of the capillary (1),
wherein the measurement recess (2) is arranged preferably between both bridges (21, 22) and wherein the measurement recess (2) has a width of preferably between 2mm-6mm, preferably between 3-5mm, and further preferred approximately 4mm.

9. The array according to any one of the preceding claims, wherein the array comprises a tempering region (6), preferably two tempering regions, which enable preferably an individual or simultaneous tempering of one or more capillaries,
wherein the tempering region (6) is arranged preferably between one of the bridges (21, 22) and the rear bridge (23) and/or between one of the bridges (21, 22) and the free end (11).

10. The array according to any one of the preceding claims, wherein the first free end (11) of each capillary (1) projects from the array (20) by projecting from one of the bridges (21, 22), in particular from the outer bridge (22) facing the free end (11).

11. The array according to any one of the preceding claims, wherein the array (20) is configured such that the free ends (11) of the capillaries may simultaneously be inserted in cavities of a standardized 96, 384 or 1536 microwell plate and the array (20) preferably comprises 4, 6, 8, 12, 16, 24, 48, or 96 capillaries (1).

12. The array according to any one of the preceding claims, wherein the array (20) may be clearly marked, preferably by means of at least one of the following procedures: labelling, colouring, barcode, 2D barcode, DataMatrix Code, RFID.

13. The array according to one of claims 1-2, wherein the distance (b) between two capillaries (1) of two arrays (20) stacked on top of another amounts to 4.5mm.

14. A kit with an array according to any one of the preceding claims and a tray for receiving at least one array, preferably for receiving a plurality of arrays.

15. A method for filling a plurality of capillaries in an array, according to any one of the preceding claims 1-13, wherein
i) the plurality of capillaries are filled simultaneously by means of capillary forces, by inserting the first free ends of the capillaries simultaneously into the wells of a microwell plate, or
ii) a plurality of the plurality of capillaries are filled simultaneously by means of a multichannel pipette via the first free ends.

16. The method for filling a plurality of capillaries according to claim 15, wherein the array and/or the capillaries are aligned obliquely between a horizontal and a vertical position or vertically with respect to gravitation.

17. The method according to any one of claims 15 to 16, wherein the method comprises at least one of the following steps conducted in an automated way:
1. removing an array from a package/stack
2. transporting the array to a filling position
3. filling the array
4. transporting the filled array to a tray/measurement device
5. positioning on the tray/in the measurement device
6. conducting a measuring procedure
7. removing the array/tray from the measurement device and transportation to a storage container (e.g. rubbish bin or intermediate storage).

18. A filling station with an array (20) according to any one of claims 1 to 13 for filling the capillaries of the array (20), wherein the filling station comprises a mounting for the array (20) and the array is preferably tilted at an angle between 0° to 180° to gravitational force.

19. A tempering device with an array (20) according to any one of claims 1 to 13 for tempering the capillaries of the array, wherein the tempering device comprises a tempering body (50) with tempering partitions (55) being spaced apart from each other, and the array (20) may be laid onto the tempering body in such a way that at least one, preferably a plurality of the tempering partitions (55) lie(s) between the capillaries.

## Revendications

1. Support (20) avec plusieurs capillaires (1), plus particulièrement pour des mesures de thermophorèse, les capillaires (1) étant disposés dans un plan et étant fixés mécaniquement au support (20) et
au moins une première extrémité libre (11) de chaque capillaire (1) dépassant au-dessus du support (20) de façon à ce que les extrémités libres des capillaires (1) puissent être introduites simultanément dans des cavités d'une plaque de microtitrage,
des éléments empilés étant prévus sur le support (20) sous la forme d'au moins une dent en saillie (101, 102, 103) et d'au moins un évidemment, l'évidement étant emboîté, lorsque les supports sont empilés, avec la dent d'un support adjacent de l'empilement.

2. Support selon la revendication 1, la distance entre des capillaires adjacents étant d'environ 2,25 mm ou un multiple entier de cette valeur, de préférence 4,5 mm.

3. Support selon la revendication 1,
i) la première extrémité libre (11) dépassant de 3 mm à 20 mm, de préférence de 10 mm à 12 mm, de préférence de 11 mm au-dessus du support et/ou la première extrémité libre (11) dépassant au-dessus du support de façon à pouvoir être introduite de 3 mm à 20 mm, de préférence de 10 mm à 12 mm, de préférence de 11 mm dans une cavité d'une plaque de microtitrage et de préférence uniquement les capillaires étant introduits dans la cavité et/ou
ii) les capillaires présentant une longueur de 5 mm à 50 mm, de préférence de 10 mm à 40 mm, de 30 à 35 mm et de préférence d'environ 32 mm.

4. Support selon l'une des revendications précédentes, les capillaires (1) étant fixées sur le support (20) de façon à ce qu'une deuxième extrémité (12) des capillaires (1) soit ouverte de façon à ce que l'air puisse s'échapper, de préférence lorsque la première extrémité libre (11) est remplie de liquide ou est plongée dans un liquide pour le remplissage.

5. Support selon l'une des revendications précédentes, qui comprend, sur au moins un côté, de préférence des deux côtés, une/plusieurs surface(s) de préhension (3, 27) et/ou aide(s) au positionnement (4, 25, 28) pour une manipulation automatique,
l'aide au positionnement étant de préférence conçue pour une préhension ou un guidage automatisé(e) et comprenant de préférence au moins une portion cunéiforme, de préférence deux portions cunéiformes.

6. Support selon l'une des revendications précédentes, le support comprenant au moins deux nervures (21, 22) qui s'étendent de préférence parallèlement entre elles, qui s'étendent de préférence transversalement par rapport à l'axe longitudinal des capillaires, et qui sont de préférence écartées entre elles,
les capillaires (1) étant de préférence fixés respectivement à au moins deux points ou zones sur le support, de préférence un point se trouvant sur la première nervure (21) et un point se trouvant sur la deuxième nervure (22).

7. Support selon l'une des revendications précédentes, le support comprenant une butée (13) qui est prévue sur une troisième nervure (23), sur laquelle les extrémités arrière des capillaires (1) peuvent être alignées.

8. Support selon l'une des revendications précédentes, le support comprenant un évidement de mesure (2), de façon à ce que le capillaire (1) puisse être traversé ou éclairés par une lumière provenant d'une source de lumière qui émet de la lumière perpendiculairement au plan commun, de préférence dans une zone centrale entre la première et la deuxième extrémité (11, 12) du capillaire (1),
l'évidement de mesure (2) étant réalisé de préférence entre les deux nervures (21, 22), la largeur de l'évidement de mesure (2) étant de préférence entre 2 mm et 6 mm, de préférence entre 3 mm et 5 mm et de préférence d'environ 4 mm.

9. Support selon l'une des revendications précédentes, le support comprenant une zone de régulation de température (6), de préférence deux zones de régulation de température, qui permettent de préférence une régulation de température individuelle ou commune d'un ou de plusieurs capillaires,
la zone de régulation de température (6) étant réalisée de préférence entre une des deux nervures (21, 22) et la nervure arrière (23) et/ou entre une des deux nervures (21, 22) et l'extrémité libre (11).

10. Support selon l'une des revendications précédentes, la première extrémité libre (11) de chaque capillaire (1) dépassant au-dessus du support (20), grâce au fait qu'elle dépasse au-dessus d'une des nervures (21, 22), plus particulièrement au-dessus de la nervure externe (22) orientée vers l'extrémité libre (11).

11. Support selon l'une des revendications précédentes, le support (20) étant configuré de façon à ce que les extrémités libres (11) des capillaires puissent être introduites simultanément dans les cavités d'une plaque de microtitrage standard de 96, 384 ou de 1536 et le support (20) étant muni de préférence de 4, 6, 8, 12, 16, 24, 48 ou 96 capillaires (1).

12. Support selon l'une des revendications précédentes, le support (20) pouvant être identifié de manière unique, de préférence avec au moins un des procédés suivants : inscription, code couleur, code-barres, code-barres 2D, code DataMatrix, RFID.

13. Support selon l'une des revendications 1 ou 2, la distance (b) entre deux capillaires (1) de deux supports (20) empilés l'un sur l'autre étant de 4,5 mm.

14. Kit avec un support selon l'une des revendications précédentes et un plateau pour le logement d'au moins un support, de préférence pour le logement de plusieurs supports.

15. Procédé de remplissage de plusieurs capillaires dans un support selon l'une des revendications précédentes 1 à 13,
i) les plusieurs capillaires étant remplis simultanément à l'aide de forces capillaires, grâce au fait que les premières extrémités libres des capillaires sont introduites simultanément dans les cavités d'une plaque de microtitrage, ou
ii) plusieurs des plusieurs capillaires étant remplis simultanément à l'aide d'une pipette multi-canal au-dessus des premières extrémités libres.

16. Procédé de remplissage de plusieurs capillaires selon la revendication 15, le support et/ou les capillaires étant orientés de manière oblique entre une position horizontale et verticale ou verticalement par rapport à la gravité.

17. Procédé selon l'une des revendications 15 à 16, ce procédé comprenant au moins une des étapes suivantes, qui est effectuée de manière automatisée :
1. retrait d'un support d'un emballage/magasin
2. transport du support vers une position de remplissage
3. remplissage du support
4. transport du support rempli vers un plateau/un dispositif de mesure
5. dépose sur le plateau/dans le dispositif de mesure
6. réalisation d'un processus de mesure
7. retrait du plateau hors du dispositif de mesure et transport vers un récipient de stockage (par exemple boîte à déchets ou entrepôt).

18. Station de remplissage avec un support (20) selon l'une des revendications 1 à 13, pour le remplissage des capillaires du support (20), la station de remplissage comprenant un logement pour le support (20) et le support étant basculé de préférence d'un angle entre 0° et 180° par rapport à la force de gravité.

19. Dispositif de régulation de température avec un support (20) selon l'une des revendications 1 à 13, pour la régulation de température des capillaires du support, le dispositif de régulation de température comprenant un corps de régulation de température (50) avec des nervures de régulation de température (55) écartées les unes des autres, et le support (20) pouvant être posé sur le corps de régulation de température de façon à ce qu'au moins une, de préférence plusieurs, nervures de régulation de température (55) se trouvent entre les capillaires.
